# EUROPÄISCHE PATENTANMELDUNG

(11) **EP 4 063 015 A1**
(43) Veröffentlichungstag der Anmeldung: **28.09.2022**
(21) Anmeldenummer: 21164105.5
(22) Anmeldetag: 22.03.2021
(51) Int. Cl.: B01L 9/00, B29C 45/76, G01B 11/245, G01B 11/27, B01L 3/02

(54) **VERFAHREN UND VORRICHTUNG ZUM ÜBERPRÜFEN VON PIPETTENSPITZEN**

(71) Anmelder: Gritec AG, 7214 Grüsch (CH)
(72) Erfinder: Hess, Peter, 5628 Aristau (CH); Albin, Samuel, 7157 Siat (CH); Wenzin, Placi, 8880 Walenstadt (CH)
(74) Vertreter: Hepp Wenger Ryffel AG

(57) **Zusammenfassung**

Verfahren zum Überprüfen von sich jeweils entlang einer Längsachse (L) erstreckenden Pipettenspitzen (1), das Verfahren umfassend die folgenden Verfahrensschritte: a) Bereitstellen von Pipettenspitzen (1), welche in einem ersten Träger (20) in einer ersten Matrixanordnung (M1) von Reihen und Spalten angeordnet sind; b) Aufnahme einer Reihe oder Spalte von Pipettenspitzen (1) aus der ersten Matrixanordnung (M1) durch eine Halteeinrichtung (10) umfassend eine Mehrzahl von in einer Reihe angeordneten Aufnahmeelementen (11) zur Aufnahme jeweils einer Pipettenspitze (1), wobei die Längsachsen (L) der durch die Aufnahmeelemente (11) gehalterten Pipettenspitzen (1) im Wesentlichen in einer gemeinsamen Ebene (E) liegen; c) Erfassen von ersten Bilddaten der jeweiligen Pipettenspitzenauslassöffnungen (2) der durch die Halteeinrichtung (10) aufgenommenen Pipettenspitzen (1) durch eine erste Bilderfassungseinrichtung (30), deren optische Achse (OA1) während der Erfassung der ersten Bilddaten parallel zur jeweiligen Längsachse (L) der in der Halteeinrichtung (10) gehalterten Pipettenspitzen (1) und auf die jeweilige Pipettenspitzenauslassöffnung (2) ausgerichtet ist; d) Erfassen von zweiten Bilddaten der in der Halteeinrichtung (10) gehalterten Pipettenspitzen (1) durch eine zweite Bilderfassungseinrichtung (40), deren optische Achse (OA2) während der Erfassung der zweiten Bilddaten im Wesentlichen senkrecht auf die durch die gehalterten Pipettenspitzen (1) definierte Ebene (E) und auf die der zweiten Bilderfassungseinrichtung (40) zugewandten Teilsegmente der jeweiligen Pipettenspitzenmantelflächen (3) der gehalterten Pipettenspitzen (1) ausgerichtet ist, sodass alle in der Halteeinrichtung (10) gehalterten Pipettenspitzen (1) im Wesentlichen in einer Bildebene der zweiten Bilderfassungseinrichtung (40) angeordnet sind; e) Ermitteln, ob die ersten und/oder zweiten Bilddaten innerhalb von vordefinierten Zulässigkeitsgrenzen liegen oder nicht, mit Hilfe einer Datenverarbeitungsanlage (70); f) Abwerfen derjenigen Pipettenspitzen (1), deren in Schritt e) ermittelte erste und/oder zweite Bilddaten ausserhalb der vordefinierten Zulässigkeitsgrenzen liegen, in einen Abfallbehälter (50) durch die Halteeinrichtung (10); g)Abgabe derjenigen Pipettenspitzen (1), deren in Schritt e) ermittelte erste und zweite Bilddaten innerhalb der vordefinierten Zulässigkeitsgrenzen liegen, in einen zweiten Träger (20') mit einer Vielzahl von Löchern (22) in einer zweiten Matrixanordnung (M2) von Reihen und Spalten, welche Löcher (22) zum Halten der abgegebenen Pipettenspitzen (1) geeignet sind; wobei in Verfahrensschritt d) die zweiten Bilddaten aller in der Halteeinrichtung (10) gehalterten Pipettenspitzen (1) gleichzeitig erfasst werden, und wobei die Pipettenspitzen (1) in Verfahrensschritt g) derart durch die Halteeinrichtung (10) abgegeben werden, dass die jeweiligen Reihen oder Spalten von Löchern (22) des zweiten Trägers (20') nacheinander aufgefüllt werden, ohne dass dabei zwischen zwei abgegebenen Pipettenspitzen (1) ein oder mehrere leere Löcher (22, 22') verbleiben.

## Beschreibung

Die vorliegende Erfindung betrifft ein Verfahren sowie eine Vorrichtung zum Überprüfen von Pipettenspitzen sowie eine Spritzgiessanlage umfassend wenigstens eine Vorrichtung zum Überprüfen von Pipettenspitzen wie nachfolgend beschrieben.

Pipettenspitzen werden üblicherweise im Spritzgussverfahren hergestellt, wobei die zur Anwendung kommenden Spritzgussvorrichtungen üblicherweise eine Mehrzahl von kreisförmig angeordneten Kavitäten aufweisen, die jeweils von einem Spritzgusswerkzeug begrenzt sind. In der Praxis besteht das Problem, dass ein Werkzeuginnenteil durch die beim Spritzvorgang auftretenden Druckverhältnisse im Laufe der Zeit aus einer ursprünglichen Optimalposition radial herausverstellt wird, sodass sich mit der Zeit die Wandstärke der hergestellten Pipettenspitzen leicht verändert. Dies wiederum führt dazu, dass die unterschiedlichen Wandabschnitte der gespritzten Pipettenspitzen unterschiedlich schnell abkühlen, was zu einem minimalen Verzug (Krümmung der Längsachse) der Pipettenspitzen führt, wobei die Pipettenspitzenauslassöffnung von zu einem späteren Zeitpunkt hergestellten Pipettenspitzen weiter von einer zentrischen Optimalposition abweicht, als die nach einem Werkzeugwechsel hergestellten Pipettenspitzen. Überschreitet diese Abweichung ein bestimmtes Mass, sind die Pipettenspitzen nicht mehr verwendbar, da diese nicht mehr zum exakten Abmessen der zu dosierenden Flüssigkeit geeignet sind und/oder nicht mehr zielgenau von einem automatisierten Analyseapparat oder sonstigen Handhabungsvorrichtungen angesteuert werden können.

Als Qualitätssicherungsmassnahme bei der Pipettenspitzenherstellung ist es aus dem Stand der Technik bekannt, beispielsweise aus der WO 00/52987 A1, einzelne Pipettenspitzen mittels eines Greifers zu einer Kamera zu transportieren, welche Bilddaten aus unterschiedlichen Rotationswinkeln um eine Längsachse der Pipettenspitze erfasst. Diese Bilddaten werden anschliessend im Hinblick auf die Einhaltung vorgegebener Toleranzen analysiert. Es hat sich jedoch herausgestellt, dass die Analyse der seitlich aufgenommenen Bilddaten hinsichtlich einer sicheren Fehlererkennung problematisch ist, insbesondere weil auch gerade, d.h. nicht verzogene Pipettenspitzen als fehlerhaft erkannt werden, wenn diese nicht optimal gerade im Greifer aufgenommen sind. Darüber hinaus ist nachteilig, dass die vereinzelte Zufuhr von Pipettenspitzen zu einer einzigen Kamera dazu führt, dass die Qualitätssicherungsmassnahme sehr zeitaufwändig ist.

Aus der EP 2913107 A1 ist ein Verfahren zur Beurteilung eines Pipettenspitzenverzugs bekannt, bei welchem der Verzug mittels Bilddaten erfasst wird. Hierbei werden in Bezug auf eine Pipettenspitzengruppe mit einer Mehrzahl von Pipettenspitzen erste und zweite Bilddaten der Pipettenspitzenenden und Pipettenspitzeneinlassöffnungen erfasst, wobei die Blickrichtungen der ersten und zweiten Bilderfassungsmittel einander entgegengesetzt sind, und wobei dann anhand der Abweichungsmasse der Pipettenspitzenauslassöffnungen ein Mittelwert der Abweichungsmasse ermittelt wird. Dieses Verfahren ist einerseits apparativ sehr aufwändig, da separate erste und zweite Bilderfassungsmittel erforderlich sind. Ferner hat sich die Bestimmung der Sollposition der Pipettenspitzenauslassöffnungen mittels der auf die Einlass-öffnung des oberen Pipettenspitzenendes ausgerichteten zweiten Bilderfassungsmittel in der Praxis als teilweise schwierig oder fehlerbehaftet erwiesen. So überlagern sich die Toleranzen bei der Bestimmung der Solllage der Pipettenspitze mit den zweiten Bilderfassungsmitteln und die Toleranzen der Bestimmung der Istlage mittels der ersten Bilderfassungsmittel miteinander, was zu Ungenauigkeiten bei der Bestimmung der tatsächlichen Abweichung des Pipettenspitzenverzugs führen kann. Auch wird bei diesem Verfahren beispielsweise eine korrekt geformte Pipettenspitze, welche sich in ihrer Halterung in einer Schieflage befindet, nicht erkannt und als Ausschuss ausgesondert, nur weil wegen der Fehlausrichtung der Pipettenspitze in der Halterung die Abweichung des spitzen Endes der Pipettenspitze von der vorgegebenen Achsrichtung als Mangel bewertet wird.

Um diese Ungenauigkeiten bei der Halterung von Pipettenspitzen zu reduzieren, schlägt die DE 10 2017 012 225 A1 eine Anpresseinrichtung vor, welche durch mechanische Kraftausübung auf die in einer Halterung gehalterte Pipettenspitze eine besonders gut definierte Lage der Pipettenspitze in der Halterung bewirkt. Die mit definiertem Sitz an der Halterung angeordnete Pipettenspitze kann somit zuverlässig und mit geringer Fehlertoleranz der Messung unterzogen werden, wobei die zu diesem Zweck vorgesehene Bilderfassungseinrichtung die Lage des freien Endes der Pipettenspitze erfasst. Der Verzug der Pipettenspitze wird als Lageabweichung eines vorbestimmten Bereichs der in der Halterung gehalterten Pipettenspitze von einer vordefinierten Solllage dieses Bereichs bei einer verzugsfreien Pipettenspitze bestimmt. Nachteilig an diesem Verfahren ist einerseits, dass es aufgrund der Vielzahl an separaten Einrichtungen der Prüfvorrichtung apparativ sehr aufwändig ist. Ferner wird zur gleichzeitigen Überprüfung einer Mehrzahl von Pipettenspitzen eine Art revolvierender Mechanismus zur Zuführung jeweils einer einzelnen Pipettenspitze zur Anpresseinrichtung oder die Verwendung mehrerer Bilderfassungseinrichtungen entsprechend der Anzahl der an der Halterung gehalterten Pipettenspitzen vorgeschlagen, was den apparativen Aufwand und die Kosten einer solchen Prüfeinrichtung weiter erhöht.

Die WO 2020/079170 A1 offenbart ein Verfahren und eine Vorrichtung zum Überprüfen von Pipettenspitzen, wobei ein sich in Achsrichtung erstreckender Referenzbereich einer gehalterten Pipettenspitze durch ein erstes Erfassungsmittel erfasst wird und ausgehend von dem Referenzbereich die Symmetrieachse der Pipettenspitze berechnet wird. Zur Erfassung einer Krümmung oder Schräglage des Spritzgussteils wird die Lage eines in Achsrichtung vom Referenzbereich beabstandeten Symmetrieachsenabschnitts durch ein zweites Erfassungsmittel erfasst und mit der zuvor errechneten Symmetrieachse verglichen. Durch die vereinzelte Zufuhr von Pipettenspitzen zur Vorrichtung bleibt die Überprüfung der Pipettenspitzen jedoch sehr zeitaufwändig.

Ausgehend von dem vorgenannten Stand der Technik liegt der vorliegenden Erfindung die Aufgabe zugrunde, solche und weitere Nachteile des Standes der Technik zu beheben und insbesondere ein vorteilhaftes Verfahren zur Überprüfung der Öffnungen und des Verzugs langgestreckter Spritzgussteile wie insbesondere Pipettenspitzen anzugeben, welches schnell, zuverlässig und mit geringem Aufwand in Bezug auf die dafür erforderliche Prüfvorrichtung durchführbar ist. Ferner liegt der vorliegenden Erfindung die Aufgabe zugrunde, eine für die Durchführung des Verfahrens geeignete Prüfvorrichtung bereitzustellen.

Die Aufgabe wird gelöst durch ein Verfahren zum Überprüfen von Pipettenspitzen, eine Vorrichtung zum Überprüfen von Pipettenspitzen, welche Vorrichtung bevorzugt zur Durchführung des erfindungsgemässen Verfahrens ausgebildet ist, sowie eine Spritzgussanlage umfassend eine erfindungsgemässe Vorrichtung zum Überprüfen von Pipettenspitzen gemäss den unabhängigen Patentansprüchen. Weitere, vorteilhafte Ausführungsformen sind Gegenstand der abhängigen Patentansprüche.

Insbesondere wir die Aufgabe durch ein Verfahren zum Überprüfen von sich jeweils entlang einer Längsachse (L) erstreckenden Pipettenspitzen gelöst, wobei das erfindungsgemässe Verfahren die folgenden Schritte umfasst: a) Bereitstellen von Pipettenspitzen, welche in einem ersten Träger in einer ersten Matrixanordnung von Reihen und Spalten in dem ersten Träger angeordnet sind; b) Aufnahme einer Reihe oder Spalte von Pipettenspitzen aus der ersten Matrixanordnung durch eine Halteeinrichtung umfassend eine Mehrzahl von in einer Reihe angeordneten Aufnahmeelementen zur Aufnahme jeweils einer Pipettenspitze. Die Längsachsen der durch die Aufnahmeelemente gehalterten Pipettenspitzen liegen dabei im Wesentlichen in einer gemeinsamen Ebene; c) Erfassen von ersten Bilddaten der jeweiligen Pipettenspitzenauslassöffnungen der durch die Halteeinrichtung aufgenommenen Pipettenspitzen durch eine erste Bilderfassungseinrichtung. Die optische Achse der ersten Bilderfassungseinrichtung ist dabei während der Erfassung der ersten Bilddaten parallel zur jeweiligen Längsachse der in der Halteeinrichtung gehalterten Pipettenspitzen auf die Pipettenspitzenauslassöffnungen ausgerichtet; d) Erfassen von zweiten Bilddaten der in der Halteeinrichtung gehalterten Pipettenspitzen durch eine zweite Bilderfassungseinrichtung. Die optische Achse der zweiten Bilderfassungseinrichtung ist dabei während der Erfassung der zweiten Bilddaten im Wesentlichen senkrecht auf die durch die gehalterten Pipettenspitzen definierte Ebene und auf die der zweiten Bilderfassungseinrichtung zugewandten Teilsegmente der jeweiligen Pipettenspitzenmantelflächen der gehalterten Pipettenspitzen ausgerichtet, sodass alle in der Halteeinrichtung gehalterten Pipettenspitzen im Wesentlichen in einer Bildebene der zweiten Bilderfassungseinrichtung angeordnet sind. Die zweiten Bilddaten aller in der Halteeinrichtung gehalterten Pipettenspitzen werden dabei gleichzeitig erfasst; e) Ermitteln, ob die ersten und/oder zweiten Bilddaten innerhalb vordefinierten Zulässigkeitsgrenzen liegen oder nicht, mit Hilfe einer Datenverarbeitungsanlage; f) Abwerfen derjenigen Pipettenspitzen, deren in Schritt e) ermittelte erste und/oder zweite Bilddaten ausserhalb der vordefinierten Zulässigkeitsgrenzen liegen, in einen Abfallbehälter durch die Halteeinrichtung; g) Abgabe derjenigen Pipettenspitzen, deren in Schritt e) ermittelte erste und zweite Bilddaten innerhalb der vordefinierten Zulässigkeitsgrenzen liegen, in einen zweiten Träger mit einer Vielzahl von Löchern in einer zweiten Matrixanordnung von Reihen und Spalten, welche Löcher zum Halten der abgegebenen Pipettenspitzen geeignet sind. Die Pipettenspitzen werden in Verfahrensschritt g) derart durch die Halteeinrichtung abgegeben, dass die jeweiligen Reihen oder Spalten von Löchern des zweiten Trägers nacheinander aufgefüllt werden, ohne dass dabei zwischen zwei abgegebenen Pipettenspitzen ein oder mehrere leere Löcher verbleiben.

Das erfindungsgemässe Verfahren erlaubt die effiziente Beurteilung sämtlicher Pipettenspitzen zur Feststellung von Abweichungen der Pipettenspitzen von einer vordefinierten Norm mittels zweier Bilderfassungseinrichtungen. Beispielsweise handelt es sich bei der Abweichung der Pipettenspitzen von einer Norm um einen Verzug des Spritzgussteils bzw. um eine Abweichung der Pipettenspitzen von einer gewünschten Form. Eine Normabweichung der Pipettenspitzen wird als Lageabweichung der Pipettenspitzen-öffnung bzw. eines vorbestimmten Bereichs der Pipettenspitzenmantelfläche von jeweils vordefinierten Solllagen dieser Bereiche gemessen. Bei jeder Aufnahme wird die theoretische Mittellinie erfasst. Ein systematischer Fehler durch schräg eingespannte Prüflinge, d.h. Pipettenspitzen, kann so ausgefiltert werden. Anders ausgedrückt wird der Verzug einer zu prüfenden Pipettenspitze durch Vergleich mit einer zuvor gemessenen, nichtverzogenen Pipettenspitze gemessen. Durch die Anordnung der gehalterten Pipettenspitzen in einer einzigen Bildebene der zweiten Bilderfassungseinrichtung kann die Erfassung der zweiten Bilddaten besonders präzise erfolgen. Das Drehen der Pipettenspitzen an ihren jeweiligen Aufnahmeelementen ermöglicht es, die Geometrie der Pipettenspitzen genauer zu erfassen.

Im Rahmen der vorliegenden Erfindung wird unter dem Begriff Matrixanordnung eine, bevorzugt regelmässige, Anordnung von zum Halten jeweils einer Pipettenspitze ausgebildeten Löchern verstanden, wobei die Löcher in Reihen und Spalten angeordnet sind. Jede Reihe umfasst dabei eine Anzahl von n Löchern und jede Spalte umfasst dabei eine Anzahl von m Löchern, sodass sich die Anzahl der in der Matrixanordnung enthaltenen Löcher aus dem Produkt aus n und m ergibt. Derartige Matrixanordnungen liegen beispielsweise in den aus dem Stand der Technik bekannten Behältern für Pipettenspitzen, sogenannten Racks, vor.

Unter dem Begriff Bilderfassungseinrichtung wird im Rahmen der vorliegenden Erfindung eine Kamera, insbesondere eine Kamera mit Objektiv und geeigneter Beleuchtung verstanden.

Es hat sich herausgestellt, dass der Verzug von Pipettenspitzen noch einige Zeit nach dem eigentlichen Herstellungsprozess in einer Spritzgiessanlage voranschreitet, weshalb es für die Qualitätssicherung vorteilhaft ist, die produzierten Pipettenspitzen zunächst für eine gewisse Zeit, insbesondere für eine Zeit von zwei Tagen, vollständig auskühlen und eine endgültige Form annehmen zu lassen. Um während dieser Zeit zum Zweck der Zwischenlagerung der zu prüfenden Pipettenspitzen nicht teure und weniger verfügbare Werkstückträger der Spritzgiessanlage vorhalten zu müssen, können die zu prüfenden Pipettenspitzen in Racks zwischengelagert werden.

In einer vorteilhaften Ausführungsform des erfindungsgemässen Verfahrens handelt es sich bei dem ersten Träger, der Pipettenspitzen in einer ersten Matrixanordnung von Reihen und Spalten bereitstellt, um ein Rack. Analog dazu handelt es sich bei dem zweiten Träger um ein Rack aufweisend eine Vielzahl von Löchern, welche in einer zweiten Matrixanordnung von Reihen und Spalten angeordnet sind.

Es ist erfindungsgemäss denkbar, dass die zu prüfenden Pipettenspitzen durch die Halteeinrichtung in Schritt b) aus dem ersten Träger aufgenommen und die geprüften Pipettenspitzen in Schritt g) zurück an den ersten Träger abgegeben werden, wobei zum Ersetzen der gegebenenfalls in Schritt f) abgeworfenen Pipettenspitzen und zum Auffüllen des ersten Trägers Pipettenspitzen aus einem Reservoir von geprüften Pipettenspitzen verwendet werden.

In einer bevorzugten Ausführungsform des erfindungsgemässen Verfahrens entnimmt die Halteeinrichtung der ersten Matrixanordnung in Schritt b) eine komplette Reihe oder eine komplette Spalte von Pipettenspitzen. Bevorzugt entnimmt die Halteeinrichtung in Schritt b) sämtliche Pipettenspitzen einer Reihe oder einer Spalte eines Racks.

Dadurch wird die Effizienz des erfindungsgemässen Verfahrens optimiert, da die durch die Aufnahmeelemente der Halteeinrichtung gehalterten Pipettenspitzen in den nachfolgenden Verfahrensschritten c) und d) jeweils gemeinsam geprüft werden, wie nachfolgend noch näher erläutert wird.

In einer bevorzugten Ausführungsform des erfindungsgemässen Verfahrens stimmt die Anzahl der Aufnahmeelemente der Halteeinrichtung mit der Anzahl der in einer Reihe oder Spalte der ersten Matrixanordnung bereitgestellten Pipettenspitzen und/oder der zweiten Matrixanordnung von Löchern im zweiten Träger überein. Mit anderen Worten ist die Halteeinrichtung auf die im erfindungsgemässen Verfahren verwendeten ersten und/oder zweiten Träger abgestimmt, wodurch sich das erfindungsgemässe Verfahren besonders kosteneffizient durchführen lässt.

Um die Bilddaten schnell und effizient erfassen zu können, wird die Position der Pipettenspitzen mit einer Messeinrichtung detektiert und die erste Bilderfassungseinrichtung so getriggert.

In einer bevorzugten Ausführungsform des erfindungsgemässen Verfahrens werden die ersten Bilddaten in Schritt c) beim Bewegen der in der Halteeinrichtung gehalterten Pipettenspitzen quer zur optischen Achse der ersten Bilderfassungseinrichtung und durch die optische Achse der ersten Bilderfassungseinrichtung relativ zueinander erfasst. Das Eintreten der jeweiligen Pipettenspitzen, insbesondere der jeweiligen Pipettenspitzenauslassöffnungen, in die optische Achse der ersten Bilderfassungseinrichtung wird dabei durch eine Messeinrichtung festgestellt und löst das Erfassen der ersten Bilddaten durch die erste Bilderfassungseinrichtung aus. Bei der Messeinrichtung zum Erfassen des Eintritts der jeweiligen Pipettenspitzen in die optische Achse der ersten Bilderfassungseinrichtung handelt es sich beispielsweise um eine Lichtschranke. Die Lichtschranke ist beispielsweise quer zur Längsachse der Pipettenspitzen und auf die jeweils durch die Pipettenspitzenauslassöffnung gerichtet, sodass beim Unterbruch der Lichtschranke das Erfassen der ersten Bilddaten durch die erste Bilderfassungseinrichtung ausgelöst wird. Es ist erfindungsgemäss selbstverständlich auch denkbar, dass die Messeinrichtung zum Erfassen des Eintritts der jeweiligen Pipettenspitzen in die optische Achse der ersten Bilderfassungseinrichtung nicht durch die optische Achse der ersten Bilderfassungseinrichtung verläuft, sondern der ersten Bilderfassungseinrichtung in Bewegungsrichtung der Halteeinrichtung vorgelagert angeordnet ist. In diesem Fall lässt sich das Auslösen der Erfassung der ersten Bilddaten durch die Wegstrecke zwischen der Messeinrichtung und der optischen Achse der ersten Bilderfassungseinrichtung sowie der Bewegungsgeschwindigkeit der Halteeinrichtung und der ersten Bilderfassungseinrichtung relativ zueinander berechnen bzw. einstellen.

Insbesondere wird lediglich die Halteeinrichtung bewegt und die erste Bilderfassungseinrichtung verbleibt ortsfest, sodass die jeweiligen Pipettenspitzenauslassöffnungen der in der Halteeinrichtung gehalterten Pipettenspitzen im Wesentlichen in einer einzigen Bildebene der ersten Bilderfassungseinrichtung an der ersten Bilderfassungseinrichtung vorbeigeführt werden.

Dadurch können alle in der Halteeinrichtung gehalterten Pipettenspitzen, insbesondere die jeweiligen Pipettenspitzenauslassöffnungen, in einem Verfahrensschritt geprüft werden, was die Geschwindigkeit der Überprüfung erhöht. Das Vorbeiführen der Pipettenspitzenauslassöffnungen in im Wesentlichen einer einzigen Bildebene der ersten Bilderfassungseinrichtung erhöht darüber hinaus die Genauigkeit der Bilderfassung.

In einer bevorzugten Ausführungsform des erfindungsgemässen Verfahrens umfasst Schritt d) die folgenden Verfahrensschritte: i. Aufnehmen eines ersten Bildes der in der Halteeinrichtung gehalterten Pipettenspitzen. Die Pipettenspitzen befinden sich dabei jeweils in einer ersten Position; ii. Drehen der in der Halteeinrichtung gehalterten Pipettenspitzen um ihre Längsachse um einen vorbestimmten Drehwinkel α in eine zweite Position; iii. Aufnehmen eines zweiten Bildes der in der Halteeinrichtung gehalterten Pipettenspitzen. Die Pipettenspitzen befinden sich dabei jeweils in der zweiten Position; Der Drehwinkel α zwischen der ersten Position und der zweiten Position der Pipettenspitzen beträgt dabei wenigstens im Wesentlichen 90°. Bevorzugt beträgt der Drehwinkel α zwischen der ersten Position und der zweiten Position der Pipettenspitzen zwischen im Wesentlichen 90° und im Wesentlichen 180°. Besonders bevorzugt beträgt der Drehwinkel α zwischen der ersten Position und der zweiten Position der Pipettenspitzen im Wesentlichen 180°.

Daraus ergibt sich der Vorteil, dass die Rundlaufprüfung sämtlicher in der Halteeinrichtung gehalterter Pipettenspitzen auf einmal, d.h. schnell, und durch die jeweilige Drehung der Pipettenspitzen um wenigstens im Wesentlichen 90° auch besonders genau erfolgen kann. Die Genauigkeit der Messung lässt sich durch eine weitere Drehung, d.h. einen grösseren Drehwinkel α zwischen der ersten Position und der zweiten Position der Pipettenspitzen, weiter erhöhen. Dies ist insbesondere dann der Fall, wenn zwischen der ersten Position und der zweiten Position weitere Bilder der Pipettenspitzen in Zwischenpositionen aufgenommen werden.

Bevorzugt werden die Pipettenspitzen zusätzlich zur ersten Position und zur zweiten Position zum Aufnehmen weiterer Bilder in eine der Anzahl der weiteren Bilder entsprechende Anzahl von Zwischenpositionen gedreht. Diese Zwischenpositionen liegen zwischen der ersten Position und der zweiten Position. Mit anderen Worten werden die ein oder mehreren Zwischenpositionen, ausgehend von der ersten Position, durch Drehen der Pipettenspitzen um einen Drehwinkel α' erreicht, wobei der Drehwinkel α' zwischen 0° und 180° beträgt. Die Zwischenpositionen sind darüber hinaus bevorzugt gleichmässig zwischen der ersten Position und der zweiten Position verteilt.

Durch die Aufnahme weiterer Bilder durch die zweite Bilderfassungseinrichtung wird die Genauigkeit der Überprüfung erhöht.

Bevorzugt beträgt die Anzahl an Zwischenposition und die Anzahl weiterer Bilder ein bis vier, wodurch ein besonders günstiges Verhältnis zwischen Messgenauigkeit, erfasster und zu verarbeitender Datenmenge und Schnelligkeit des Verfahrens erreicht wird.

In einer bevorzugten Ausführungsform des erfindungsgemässen Verfahrens werden die Pipettenspitzen jeweils kraftschlüssig an den Aufnahmeelementen der Halteeinrichtung gehaltert. Die kraftschlüssige Verbindung kann in einer besonders effizienten und zuverlässigen Weise durch Beaufschlagung der Pipettenspitzen mit Unterdruck erfolgen.

In einer bevorzugten Ausführungsform des erfindungsgemässen Verfahrens sind die Pipettenspitzen beim Erfassen der zweiten Bilddaten in Schritt d) zwischen der zweiten Bildeinfassungseinrichtung und einer fest relativ zur zweiten Bilderfassungseinrichtung angeordneten Beleuchtungseinrichtung positioniert. Die Beleuchtungseinrichtung sendet dabei Licht auf die zweite Bilderfassungseinrichtung aus, in die zur optischen Achse der zweiten Bilderfassungseinrichtung entgegengesetzte Richtung.

Hierdurch lässt sich der Kontrast der im Strahlengang der zweiten Bilderfassungseinrichtung positionierten Pipettenspitzen bezogen auf den durch die Beleuchtungseinrichtung gebildeten Bildhintergrund erhöhen, was die Genauigkeit der Überprüfung der Pipettenspitzen in Schritt d) weiter erhöht.

In einer bevorzugten Ausführungsform des erfindungsgemässen Verfahrens steuert die Datenverarbeitungsanlage eine Bewegungseinrichtung zum gesteuerten motorischen Bewegen der Halteeinrichtung in Richtung einer X-, Y- und Z-Raumachse an. Insbesondere wird die Bewegungseinrichtung nur zum gesteuerten motorischen Bewegen der Halteeinrichtung in Richtung einer X- und Y-Raumachse angesteuert. Durch eine entsprechend geeignete Anordnung der in den einzelnen Verfahrensschritten durch die Halteeinrichtung angesteuerten Positionen lässt sich das Bewegungserfordernis der Halteeinrichtung auf zwei Dimensionen reduzieren, was die Komplexität des Verfahrens sowie der zur Durchführung des Verfahrens verwendeten Vorrichtung reduziert und dadurch zu geringeren Anschaffungs- und Betriebskosten führt.

In einer bevorzugten Ausführungsform des erfindungsgemässen Verfahrens umfasst die Datenverarbeitungsanlage eine Benutzerschnittstelle und das Verfahren den zusätzlichen Verfahrensschritt: h) Auswählen von wenigstens einem Aufnahmeelement der Halteeinrichtung durch einen Benutzer, wobei die an den ausgewählten Aufnahmeelementen gehalterten Pipettenspitzen in Folge der Auswahl unabhängig von den erfassten ersten und zweiten Bilddaten in Schritt f) als Ausschuss verworfen werden. Schritt h) wird dabei vor irgendeinem der Schritte a) bis f) durchgeführt.

Das Vorsehen einer Benutzerschnittstelle, welche die manuelle Auswahl wenigstens eines Aufnahmeelements der Halteeinrichtung bzw. die Abwahl der jeweils an diesem oder diesen Aufnahmeelementen gehalterten Pipettenspitzen durch einen Benutzer erlaubt, bringt den Vorteil, dass die abgewählten Pipettenspitzen - unabhängig von den in Schritt c) und/oder Schritt d) erfassten Bilddaten - in Schritt f) des erfindungsgemässen Verfahrens als Ausschuss behandelt werden können. Dies kann beispielsweise vorteilhaft sein, wenn bereits aus einem dem erfindungsgemässen Verfahren vorgelagerten Verfahren bekannt ist, dass bestimmte Positionen der ersten Matrixanordnung fehlerhafte Pipettenspitzen enthalten. Ohne sich auf diese Erklärung beschränken zu wollen wird davon ausgegangen, dass das Spritzgiessen einzelner Ausschuss produzierender Kavitäten nicht einfach gestoppt werden kann, da der thermische Haushalt des Spritzgusswerkzeuges ansonsten zu stark durcheinandergeraten würde. Die manuelle Auswahl durch den Benutzer stellt somit ein zweites Sicherheitsinstrument dar, welches sicherstellt, dass die betreffenden Pipettenspitzen nicht in den zweiten Träger abgegeben werden.

Die Aufgabe wird weiter gelöst durch eine Vorrichtung zum Überprüfen von sich jeweils entlang einer Längsachse erstreckenden Pipettenspitzen, welche Vorrichtung insbesondere zur Durchführung des hierin beschriebenen Verfahrens zum Überprüfen von Pipettenspitzen ausgebildet ist.

Insbesondere wird die Aufgabe gelöst durch eine Vorrichtung umfassend eine zur Bereitstellung eines ersten Trägers enthaltend Pipettenspitzen in einer ersten Matrixanordnung von Reihen und Spalten ausgebildete Aufnahmeposition sowie eine Halteeinrichtung zum Aufnehmen einer Reihe oder Spalte von Pipettenspitzen aus der an der Aufnahmeposition bereitgestellten ersten Matrixanordnung von Reihen und Spalten. Die Halteeinrichtung umfasst eine Mehrzahl von in einer Reihe angeordneten Aufnahmeelementen, welche zur Aufnahme jeweils einer Pipettenspitze ausgebildet sind. Die Längsachsen der durch die Aufnahmeelemente gehalterten Pipettenspitzen liegen dabei im Wesentlichen in einer gemeinsamen Ebene. Die erfindungsgemässe Vorrichtung umfasst ferner eine erste Bilderfassungseinrichtung zum Erfassen von ersten Bilddaten der jeweiligen Pipettenspitzenauslassöffnungen der durch die Halteeinrichtung aufgenommenen Pipettenspitzen sowie eine zweite Bilderfassungseinrichtung zum Erfassen von zweiten Bilddaten der in der Halteeinrichtung gehalterten Pipettenspitzen. Die erfindungsgemässe Vorrichtung umfasst weiter eine Datenverarbeitungsanlage, welche signalleitend mit der ersten Bilderfassungseinrichtung, der zweiten Bilderfassungseinrichtung und der Halteeinrichtung verbunden ist. In der Datenverarbeitungsanlage sind Zulässigkeitsgrenzen für die ersten und/oder zweiten Bilddaten vordefiniert, d.h. hinterlegt. Die erfindungsgemässe Vorrichtung umfasst weiter einen zur Aufnahme von durch die Halteeinrichtung abgeworfenen Pipettenspitzen ausgebildeten Abfallbehälter sowie eine Abgabeposition, auf der ein zweiter Träger mit einer Vielzahl von Löchern in einer zweiten Matrixanordnung von Reihen und Spalten bereitstellbar ist. Die Löcher des zweiten Trägers sind dabei zum Halten der Pipettenspitzen geeignet. Die erfindungsgemässe Vorrichtung weist Mittel zum Ausrichten der optischen Achse der ersten Bilderfassungseinrichtung parallel zur jeweiligen Längsachse der in der Halteeinrichtung gehalterten Pipettenspitzen und auf die jeweiligen Pipettenspitzenauslassöffnungen auf. Diese Mittel sind auch zum Ausrichten der optischen Achse der zweiten Bilderfassungseinrichtung im Wesentlichen senkrecht auf die durch die gehalterten Pipettenspitzen definierte Ebene und auf die der zweiten Bilderfassungseinrichtung zugewandten Teilsegmente der jeweiligen Pipettenspitzenmantelflächen der gehalterten Pipettenspitzen ausgebildet. Die Halteeinrichtung der erfindungsgemässen Vorrichtung ist zwischen der Aufnahmeposition, der ersten Bilderfassungseinrichtung, der zweiten Bilderfassungseinrichtung, dem Abfallbehälter und/oder der Abgabeposition hin und her bewegbar und zum nacheinander Auffüllen der jeweiligen Reihen oder Spalten von Löchern des zweiten Trägers mit Pipettenspitzen ausgebildet, ohne dass dabei zwischen zwei abgegebenen Pipettenspitzen ein oder mehrere leere Löcher verbleiben.

Bevorzugt ist die Aufnahmeposition und/oder die Abgabeposition der erfindungsgemässen Vorrichtung jeweils zur Bereitstellung von zumindest einem Rack ausgebildet.

Bei den Mitteln zur Ausrichtung der optischen Achsen der beiden Bilderfassungseinrichtungen und der in der Halteeinrichtung gehalterten Pipettenspitzen handelt es sich beispielsweise um eine durch die Datenverarbeitungsanlage ansteuerbare Bewegungseinrichtung zum gesteuerten motorischen Bewegen der Halteeinrichtung in Richtung einer X-, Y- und Z-Raumachse. Aus den bereits beim erfindungsgemässen Verfahren genannten Gründen ist die Halteeinrichtung bevorzugt nur in Richtung einer X- und Y-Raumachse durch die Bewegungseinrichtung bewegbar.

Mit Hilfe der erfindungsgemässen Vorrichtung lassen sich aufgenommenen Pipettenspitzen jeweils einzeln um die Rotationsachse der Pipettenspitzen, d.h. um ihre Längsachse, drehen, wobei lediglich eine Kamera zur Rundlaufprüfung der Pipettenspitzen benötigt wird, wie nachfolgend noch näher erläutert wird. Dadurch werden Kosten gespart. Durch die Einzelkontrolle jeder Pipettenspitze wird zudem das Problem gelöst, dass fehlerhafte Pipettenspitzen in den Verpackungsbehälter gelangen und bereits abgepackte, komplett gefüllte Pipettenspitzenhalter entsorgt werden müssen oder dass fehlerbehaftete Pipetten aufwendig durch fehlerfreie Pipetten ersetzt werden müssen. Derartige Pipettenspitzenhalter sind auch unter dem Begriff "Rack" bekannt. Stattdessen können fehlerhafte Pipettenspitzen bereits vorher aussortiert werden, beispielsweise durch Abwurf dieser fehlerhaften Pipettenspitzen in einen für Ausschussteile vorgesehenen Behälter durch die Vorrichtung. Somit werden nur Pipettenspitzen, welche die im jeweiligen Einzelfall vordefinierten Qualitätsanforderungen erfüllen, durch die Vorrichtung in Verpackungsbehälter überführt.

In einer bevorzugten Ausführungsform ist die Datenverarbeitungsanlage der erfindungsgemässen Vorrichtung mit einer der erfindungsgemässen Vorrichtung vorgelagerten Spritzgiessanlage, welche Pipettenspitzen in mehreren Kavitäten in einem Spritzgusswerkzeug produziert, signalleitend verbunden. Die aus den Kavitäten des Spritzgusswerkzeugs entnommenen Pipettenspitzen können nachverfolgbar in die hier beschriebene erste Matrixanordnung von Pipettenspitzen überführt werden. In anderen Worten ist es möglich nachzuverfolgen, aus welcher Kavität eines Spritzgusswerkzeugs eine Pipettenspitze auf einer bestimmten Position in der ersten Matrixanordnung stammt. Durch die ständige Kontrolle der Qualität jeder einzelnen Pipettenspitze durch das erfindungsgemässe Verfahren bzw. die erfindungsgemässe Vorrichtung kann die Datenverarbeitungsanlage der erfindungsgemässen Vorrichtung automatisch herausfinden, welche Kavität Probleme bereitet, und die betroffene Kavität oder die betroffenen Kavitäten danach abwählen. Wie vorhergehend beschrieben, werden die aus einer abgewählten Kavität stammenden Pipettenspitzen - unabhängig von den in Schritt c) oder Schritt d) des erfindungsgemässen Verfahrens erfassten Bilddaten - als Ausschuss behandelt und in keinem Fall in Schritt g) des erfindungsgemässen Verfahrens an den zweiten Träger abgegeben.

In einer bevorzugten Ausführungsform umfasst die erfindungsgemässe Vorrichtung ferner eine Messeinrichtung zum Feststellen des Eintritts der jeweiligen Pipettenspitzen, insbesondere der jeweiligen Pipettenspitzenauslassöffnungen, in die optische Achse der ersten Bilderfassungseinrichtung. Die Messeinrichtung ist signalleitend mit der ersten Bilderfassungseinrichtung verbunden und zum Auslösen der Erfassung der ersten Bilddaten durch die erste Bilderfassungseinrichtung ausgebildet. Bevorzugt handelt es sich bei der Messeinrichtung zum Feststellen des Eintritts der jeweiligen Pipettenspitzen in die optische Achse der ersten Bilderfassungseinrichtung um eine Lichtschranke.

Eine solche Messeinrichtung zum Auslösen der Bilderfassung weist den Vorteil auf, dass dadurch das Erfassen der ersten Bilddaten beschleunigt werden kann.

In einer bevorzugten Ausführungsform der erfindungsgemässen Vorrichtung weist die Halteeinrichtung Mittel zum Drehen der in der Halteeinrichtung gehalterten Pipettenspitzen um ihre Längsachse auf. Die Mittel zum Drehen der Pipettenspitzen sind dabei zum Drehen der Pipettenspitzen aus einer ersten Position in eine zweite Position um einen Drehwinkel α von wenigstens im Wesentlichen 90° ausgebildet. Bevorzugt beträgt der Drehwinkel α zwischen der ersten Position und der zweiten Position der Pipettenspitzen zwischen im Wesentlichen 90° und im Wesentlichen 180°. Besonders bevorzugt beträgt er Drehwinkel α zwischen der ersten Position und der zweiten Position der Pipettenspitzen im Wesentlichen 180°.

Bevorzugt umfassen die Mittel zum Drehen der in der Halteeinrichtung gehalterten Pipettenspitzen an jedem Aufnahmeelement ein Zahnrad. Die Zahnräder benachbarter Aufnahmeelemente greifen dabei ineinander und bilden einen Zahnradverbund, und sind durch einen Drehantrieb drehbar. Der Drehantrieb ist bevorzugt an einem Ende des Zahnradverbunds angeordneten. Dadurch kann die Halteeinrichtung besonders kompakt und platzsparend ausgestaltet werden.

Alternativ umfassen die Mittel zum Drehen der in der Halteeinrichtung gehalterten Pipettenspitzen an jedem Aufnahmeelement ein Zahnrad, wobei jeweils zwei benachbarte Zahnräder über ein Zwischenzahnrad unter Ausbildung eines Zahnradverbunds miteinander in Wirkverbindung stehen. In diesem Fall ist wenigstens eines der Zahnräder oder eines der Zwischenzahnräder des Zahnradverbunds durch einen Drehantrieb drehbar. Dadurch ist der gesamte Zahnradverbund drehbar.

Alternativ können die jeweils an einem Aufnahmeelement angeordneten Zahnräder benachbarter Aufnahmeelemente nicht ineinandergreifen. In diesem Fall sind die Zahnräder durch einen gemeinsamen Zahnstangentrieb oder über einen gemeinsamen Zahnriemen drehbar. Dadurch sind alle Zahnräder und damit alle Aufnahmeelemente durch den Zahnstangentrieb bzw. den Zahnriemen in dieselbe Richtung drehbar.

Bei der Verwendung eines Zahnriemens ist es vorteilhaft, Abstützmittel zum Sicherstellen der Wirkverbindung zwischen den Zahnrädern und dem Zahnriemen vorzusehen. Die Abstützmittel verhindern das Abheben des Zahnriemens von den Zahnrädern und stellen somit einen ununterbrochenen und sicheren Antrieb der jeweiligen Zahnräder sicher. Besonders bevorzugt ist es, die Abstützmittel im Bereich jeder Kontaktstelle der Zahnräder mit dem Zahnriemen anzuordnen.

Alternativ umfassen die Mittel zum Drehen der in der Halteeinrichtung gehalterten Pipettenspitzen einen Einzelantrieb, beispielsweise einen Elektromotor, an jedem Aufnahmeelement. Dadurch ist jedes Aufnahmeelement ist durch seinen Einzelantrieb unabhängig von den restlichen Aufnahmeelementen der Halteeinrichtung drehbar.

Alternativ umfassen die Mittel zum Drehen der in der Halteeinrichtung gehalterten Pipettenspitzen an jedem Aufnahmeelement eine Scheibe, welche Scheibe in Umfangsrichtung des jeweiligen Aufnahmeelementes drehfest an diesem angeordnet ist. An den Scheiben ist jeweils exzentrisch, bezogen auf die Längsachse des jeweiligen Aufnahmeelements, ein Stangenantrieb angesetzt. Durch den Stangenantrieb wird eine Hin- und Herbewegung einer Antriebsstange in eine Drehbewegung der Aufnahmeelemente umgeformt.

In einer bevorzugten Ausführungsform der erfindungsgemässen Vorrichtung sind die Mittel zum Drehen der in der Halteeinrichtung gehalterten Pipettenspitzen zum Drehen der Pipettenspitzen in Zwischenpositionen zwischen der ersten Position und der zweiten Position ausgebildet. Insbesondere sind die Mittel zum Drehen der in der Halteeinrichtung gehalterten Pipettenspitzen zum Drehen der Pipettenspitzen in eine bis vier Zwischenpositionen zwischen der ersten Position und der zweiten Position ausgebildet.

Bevorzugt sind die Zwischenpositionen gleichmässig zwischen der ersten Position und der zweiten Position verteilt, was eine besonders sichere Überprüfung des Rundlaufs der jeweiligen Pipettenspitzen erlaubt.

In einer bevorzugten Ausführungsform der erfindungsgemässen Vorrichtung stimmt die Anzahl der Aufnahmeelemente der Halteeinrichtung mit der Anzahl der in einer Reihe oder Spalte der ersten Matrixanordnung bereitgestellten Pipettenspitzen überein.

Durch die Abstimmung der Anzahl an Aufnahmeelementen und der Anzahl von Elementen, d.h. Pipettenspitzen, einer Reihe und/oder Spalte der ersten Matrixanordnung ist die erfindungsgemässe Vorrichtung besonders geeignet zur effizienten Durchführung des erfindungsgemässen Verfahrens ausgestaltet, da die Halteeinrichtung in Schritt b) des erfindungsgemässen Verfahrens jeweils eine ganze Reihe oder Spalte aus der ersten Matrixanordnung aufnehmen und den Bilderfassungseinrichtungen zuführen kann. Bevorzugt umfasst die Halteeinrichtung dabei wenigstens fünf, bevorzugt wenigstens zehn und noch besser wenigstens fünfzehn Aufnahmeelemente, da sich mit einer steigenden Anzahl an gleichzeitig geprüften Pipettenspitzen die Vorteile des erfindungsgemässen Verfahrens, insbesondere hinsichtlich seiner Effizienz und Schnelligkeit, weiter erhöhen.

In einer bevorzugten Ausführungsform der erfindungsgemässen Vorrichtung weisen die Aufnahmeelemente jeweils einen Koppelansatz mit Vakuumanschluss auf, um die Pipettenspitzen durch Beaufschlagung des von mit Unterdruck an den Aufnahmeelementen der Halteeinrichtung zu haltern. Die Koppelansätze sind dabei jeweils derart ausgebildet, dass Sie in das zur Pipettenspitzenauslassöffnung gegenüberliegende Aufsteckende einer Pipettenspitze einführbar sind und sich nach der Beaufschlagung der Pipettenspitze mit Unterdruck ein im Wesentlichen formschlüssiger Sitz und damit eine gewisse Dichtigkeit zwischen dem Koppelanschluss und der Pipettenspitze einstellt.

Eine derartige Ausgestaltung der Aufnahmeelemente weist den Vorteil auf, dass die Pipettenspitzen zuverlässig gehaltert und durch Aufheben des Unterdrucks in den gehalterten Pipettenspitzen auch einfach wieder abgeworfen werden können. Auf eine gesonderte Abwurfeinrichtung zum Abwerfen der Pipettenspitzen von den Aufnahmeelementen kann bevorzugt verzichtet werden.

Bevorzugt sind die Aufnahmeelemente konisch geformt, wodurch das Einführen der Aufnahmeelemente in das Aufsteckende der Pipettenspitzen erleichtert wird, die Dichtigkeit zwischen Aufnahmeelement und Pipettenspitze erhöht wird, und zudem ein gewisser reibschlüssiger Presssitz zwischen dem Koppelansatz und dem nahe dem Aufsteckende angeordneten Koppelbereich der Pipettenspitze erreicht wird, was eine besonders sichere Halterung der Pipettenspitzen an den jeweiligen Aufnahmeelementen bewirkt.

In einer bevorzugten Ausführungsform umfasst die erfindungsgemässe Vorrichtung eine Beleuchtungseinrichtung, welche fest relativ zur zweiten Bilderfassungseinrichtung angeordnet ist. Die Beleuchtungseinrichtung ist zur Aussendung von Licht in die zur optischen Achse der zweiten Bilderfassungseinrichtung entgegengesetzte Richtung auf die zweite Bilderfassungseinrichtung ausgebildet. Hierdurch lässt sich der Kontrast zwischen den Pipettenspitzen und dem durch die Beleuchtungseinrichtung gebildeten Hintergrund vergrössern und die Erfassung der zweiten Bilddaten durch die zweite Bilderfassungseinrichtung verbessern, wie vorgehend beschrieben.

In einer bevorzugten Ausführungsform umfasst die Datenverarbeitungsanlage der erfindungsgemässen Vorrichtung eine Benutzerschnittstelle, welche zum Auswählen von wenigstens einem Aufnahmeelement der Halteeinrichtung durch einen Benutzer ausgebildet ist. In Folge der Auswahl sind die an den ausgewählten Aufnahmeelementen gehalterten Pipettenspitzen unabhängig von den erfassten ersten und zweiten Bilddaten als Ausschuss verwerfbar. Wie vorgehend bereits beschrieben lasst sich hierdurch ausschliessen, dass Pipettenspitzen, welche bereits im Vorfeld des erfindungsgemässen Verfahrens als fehlerhaft identifiziert wurden, in den zweiten Träger abgegeben werden.

In einer bevorzugten Ausführungsform der erfindungsgemässen Vorrichtung sind die Aufnahmeelemente der Halteeinrichtung in Bezug zueinander beweglich ausgebildet. Dadurch lässt sich ihre Position zueinander an die erste Matrixanordnung und/oder die zweite Matrixanordnung von Pipettenspitzen anpassen, wodurch die erfindungsgemässe Vorrichtung variabel ist und flexibel an unterschiedliche Bedürfnisse, d.h. unterschiedliche erste und/oder zweite Matrixanordnungen, anpassbar ist.

Die Aufgabe wird weiter gelöst durch eine Spritzgiessanlage zur Herstellung und Verpackung von Pipettenspitzen, wobei die erfindungsgemässe Spritzgiessanlage wenigstens eine erfindungsgemässe Vorrichtung zum Überprüfen von Pipettenspitzen umfasst.

Weitere Vorteile, Merkmale und Einzelheiten der Erfindung werden nachfolgend anhand von Zeichnungen näher erläutert, in denen gleiche oder analoge Elemente grundsätzlich mit denselben Bezugszeichen versehen sind. Es zeigen:
- Fig. 1:: Flussdiagramm einer Variante des Verfahrens zur Überprüfung von Pipettenspitzen;
- Fig. 2a:: Schematische Darstellung einer ersten Matrixanordnung von Pipettenspitzen in Schritt a) des in Fig. 1 dargestellten Verfahrens;
- Fig. 2b:: Schematische Darstellung der Matrixanordnung von Pipettenspitzen aus Fig. 2a nach Schritt b) des in Fig. 1 dargestellten Verfahrens;
- Fig. 2c:: Schematische Darstellung eines Trägers mit in einer zweiten Matrixanordnung angeordneten Löchern zur Aufnahme von Pipettenspitzen nach Schritt g) des in Fig. 1 dargestellten Verfahrens;
- Fig. 2d:: Schematische Darstellung der ersten Matrixanordnung von Pipettenspitzen aus Fig. 2b nach der erneuten Durchführung von Schritt b) des in Fig. 1 dargestellten Verfahrens;
- Fig. 2e:: Schematische Darstellung des Trägers aus Fig. 2c nach der erneuten Durchführung von Schritt g) des in Fig. 1 dargestellten Verfahrens;
- Fig. 3a:: Eine Halteeinrichtung mit einer Mehrzahl von Aufnahmeelementen zur Aufnahme von Pipettenspitzen in einem Längsschnitt;
- Fig. 3b:: Eine Stirnseitenansicht der Halteeinrichtung aus Fig. 3a;
- Fig. 3c:: Einen Ausschnitt der in Fig. 3a gezeigten Halteeinrichtung ohne Pipettenspitzen;
- Fig. 4:: Schematische Darstellung verschiedener Ausführungsformen der Mittel zum Drehen der in der Halteeinrichtung gehalterten Pipettenspitzen;
- Fig. 5:: Perspektivische Ansicht einer Anordnung umfassend eine Halteeinrichtung und eine erste Bilderfassungseinrichtung;
- Fig. 6:: Perspektivische Ansicht einer Anordnung umfassend eine Halteeinrichtung und eine zweite Bilderfassungseinrichtung;
- Fig. 7:: Perspektivische Ansicht einer Variante der Vorrichtung zur Überprüfung von Pipettenspitzen.

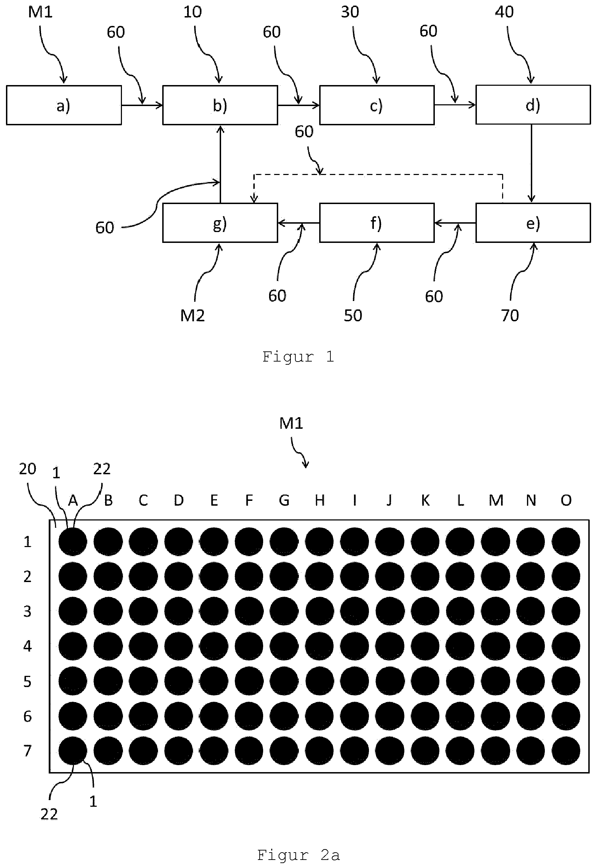

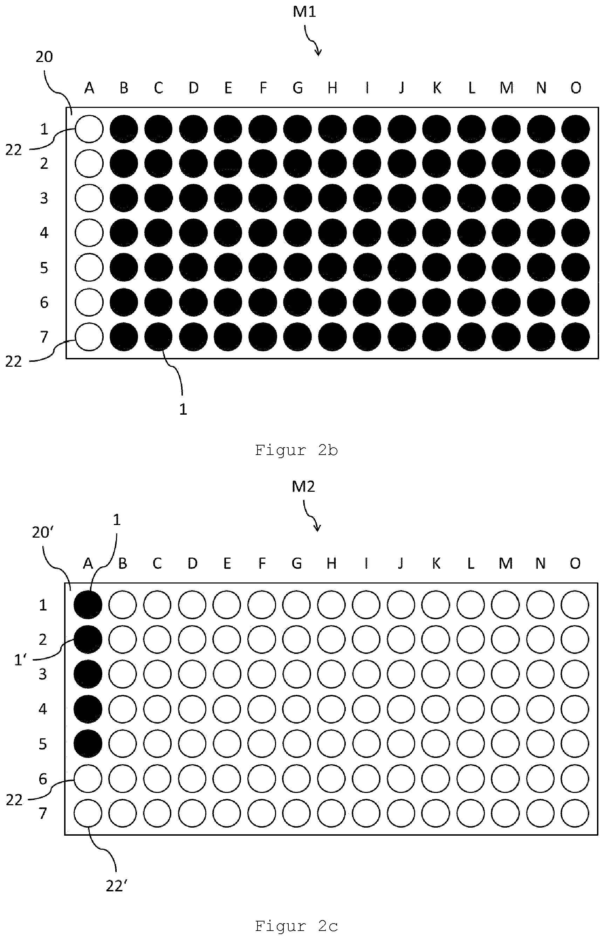

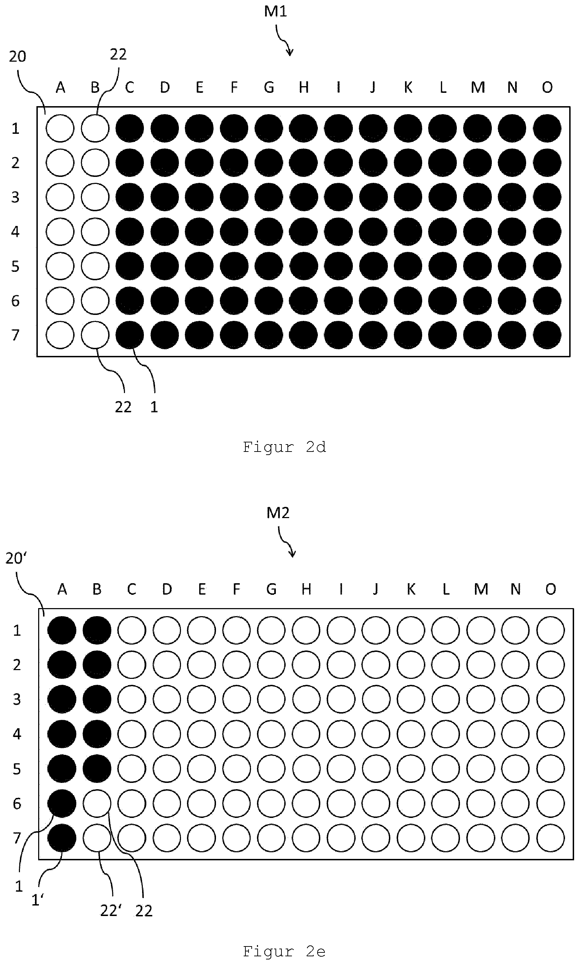

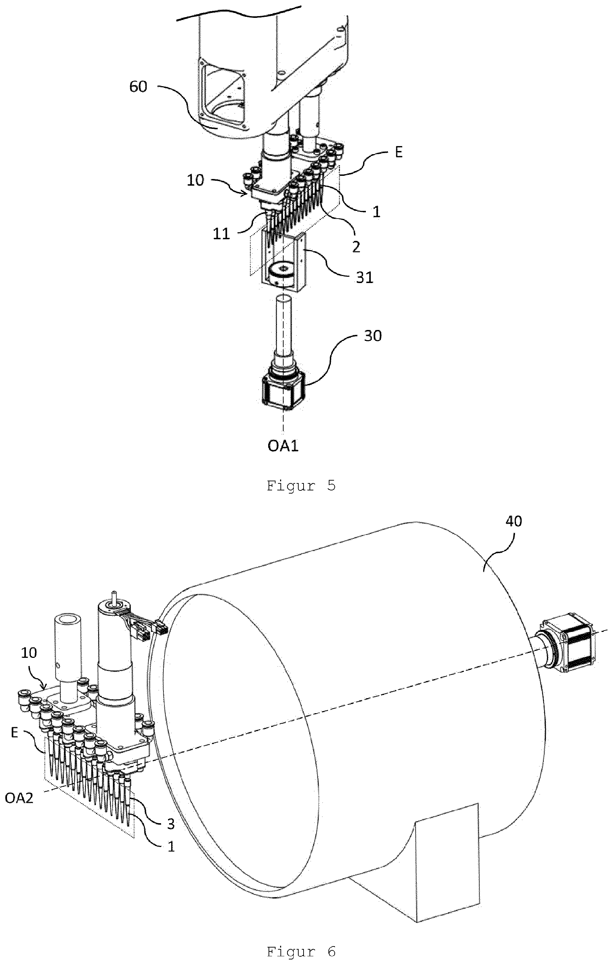

Figur 1 zeigt ein schematisches Flussdiagramm einer Variante des erfindungsgemässen Verfahrens zur Überprüfung von Pipettenspitzen. Das Verfahren umfasst das Bereitstellen von Pipettenspitzen in einer ersten Matrixanordnung M1 von Reihen und Spalten in Verfahrensschritt a). Die bereitgestellten Pipettenspitzen werden in Schritt b) durch eine Halteeinrichtung 10 aus der ersten Matrixanordnung M1 von Pipettenspitzen aufgenommen, wie noch detailliert zu den Figuren 2a, 2b, 2d beschrieben wird. Die in Schritt b) aufgenommenen Pipettenspitzen werden in Schritt c) zum Erfassen von ersten Bilddaten der Pipettenspitzen einer ersten Bilderfassungseinrichtung 30 zugeführt, wie noch detailliert zu Figur 5 ausgeführt wird. Anschliessend werden die an der Halteeinrichtung gehalterten Pipettenspitzen in Schritt d) zum Erfassen von zweiten Bilddaten der Pipettenspitzen einer zweiten Bilderfassungseinrichtung 40 zugeführt, wie noch detailliert zu Figur 6 ausgeführt wird. Nach dem Erfassen der ersten und zweiten Bilddaten der Pipettenspitzen in den Schritten c) und d) wird durch eine Datenverarbeitungsanlage 70 der Vorrichtung, mit der das erfindungsgemässe Verfahren durchgeführt wird, ermittelt, ob die ersten und/oder zweiten Bilddaten innerhalb vordefinierten Zulässigkeitsgrenzen liegen oder nicht. Diese Zulässigkeitsgrenzen sind in Datenverarbeitungsanlage 70 hinterlegt. Im in Figur 1 dargestellten Ausführungsbeispiel ergab die Auswertung der ersten und/oder zweiten Bilddaten in Schritt e), dass einige der in Schritt c) und Schritt d) geprüften Pipettenspitzen ausserhalb der vordefinierten Zulässigkeitsgrenzen liegen. Daraufhin wird die Halteeinrichtung 10 in Schritt f) über eine Öffnung eines Abfallbehälters 50 bewegt und die fehlerhaften Pipettenspitzen in den Abfallbehälter 50 abgeworfen. Abschliessend werden diejenigen Pipettenspitzen, deren in Schritt e) ermittelte erste und zweite Bilddaten innerhalb der vordefinierten Zulässigkeitsgrenzen liegen, in einen zweiten Träger mit einer Vielzahl von Löchern, welche zum Halten der abgegebenen Pipettenspitzen geeignet und in dem zweiten Träger in einer zweiten Matrixanordnung M2 von Reihen und Spalten angeordnet sind, abgegeben, wie noch detailliert zu den Figuren 2c und 2e beschrieben wird. Alternativ ist es möglich, dass sämtliche der in Schritt b) aufgenommenen Pipettenspitzen innerhalb der vordefinierten Zulässigkeitsgrenzen liegen, wie durch die gestrichelte Linie in Figur 1 dargestellt. Die Halteeinrichtung 10 ist an einer Bewegungseinrichtung 60 zur motorischen Bewegung der Halteeinrichtung 10 befestigt, welche Bewegungseinrichtung 60 die Halteeinrichtung 10 von und zu den einzelnen Stationen der Verfahrensschritte a) bis g) bewegt.

Figur 2a zeigt eine schematische Draufsicht auf einen ersten Träger 20 mit einer Vielzahl von Löchern 22 zum Halten von Pipettenspitzen 1, welche Löcher 22 in einer ersten Matrixanordnung M1 in dem ersten Träger 20 angeordnet sind. In dem gezeigten Ausführungsbeispiel haltert jedes der Löcher 22 im ersten Träger 20 eine Pipettenspitze 1, sodass der erste Träger 20 insgesamt einhundertfünf Pipettenspitzen 1 bereitstellt. Die erste Matrixanordnung M1 besteht folglich aus fünfzehn Spalten A-O und sieben Reihen von Löchern 22. Beispielsweise handelt es sich bei dem in Figur 2a gezeigten, ersten Träger 20 um die Lochplatte eines Racks für Pipettenspitzen. Die in Figur 2a dargestellte Situation stellt nur eine mögliche Ausgangssituation von Schritt a) des in Figur 1 dargestellten Verfahrens zur Überprüfung von Pipettenspitzen dar, d.h. eine Ausgangssituation, in der ein vollständig mit Pipettenspitzen 1 gefüllter erster Träger 20 in Schritt a) des erfindungsgemässen Verfahrens bereitgestellt wird. Es ist erfindungsgemäss jedoch auch denkbar, dass der in Schritt a) des erfindungsgemässen Verfahrens bereitgestellte erste Träger 20 nicht oder nicht mehr vollständig mit Pipettenspitzen 1 gefüllt ist, wie nachfolgend zu Figur 2c beschrieben, und/oder die erste Matrixanordnung ein oder mehrere freie Plätze zwischen zwei benachbarten Pipettenspitzen 1, 1' aufweist.

Figur 2b zeigt eine schematische Draufsicht auf den in Figur 2a gezeigten ersten Träger 20, nachdem in Schritt b) des in Figur 1 dargestellten Verfahrens eine komplette Spalte von Pipettenspitzen 1 durch eine Halteeinrichtung (nicht gezeigt) aus der ersten Matrixanordnung M1 aufgenommen wurde, wobei die komplette Spalte im dargestellten Ausführungsbeispiel die Positionen A1 bis A7 des ersten Trägers 20 umfasst.

Figur 2c zeigt eine schematische Draufsicht auf einen zweiten Träger 20' mit einer Vielzahl von Löchern 22 zum Halten von Pipettenspitzen 1, welche Löcher 22 in einer zweiten Matrixanordnung M2 in dem zweiten Träger 20' angeordnet sind. Der in Figur 2c dargestellte zweite Träger 20' entspricht hinsichtlich der Anzahl und Anordnung der Löcher 22 dem Träger aus Figur 2a, d.h. dass die erste Matrixanordnung M1 und die zweite Matrixanordnung M2 in dieser Variante des erfindungsgemässen Verfahrens zum Überprüfen von Pipettenspitzen 1 identisch sind. Es ist erfindungsgemäss jedoch auch denkbar, dass sich die erste Matrixanordnung M1 und die zweite Matrixanordnung M2 voneinander unterscheiden, insbesondere hinsichtlich der Anzahl von Reihen und Spalten und/oder hinsichtlich des Abstands der Löcher 22 in den Trägern 20, 20' relativ zueinander, welche Löcher 22 die jeweilige Matrixanordnung definieren. In dem in Figur 2c dargestellten Träger wurden die Löcher 22 auf den Positionen A1 bis A5 des zweiten Trägers 20' in Schritt g) des in Figur 1 dargestellten Verfahrens mit jeweils einer Pipettenspitze 1 besetzt, wohingegen die beiden verbleibenden Löcher 22 der Spalte A, d.h. die Positionen A6 und A7, in Schritt g) unbesetzt blieben. Die in Figur 2c dargestellte Situation ergibt sich, ausgehend von der in Figur 2b dargestellten Situation, dadurch, dass Schritt e) des in Figur 1 dargestellten Verfahrens ergab, dass die in den Schritten c) und d) erfassten ersten und/oder zweiten Bilddaten von zwei der sieben in Schritt b) aufgenommenen Pipettenspitzen nicht innerhalb von vordefinierten Zulässigkeitsgrenzen liegen (nicht gezeigt). In der Folge wurden diese beiden, in Schritt e) ermittelten Pipettenspitzen 1 in Schritt f) des in Figur 1 dargestellten Verfahrens durch die Halteeinrichtung in einen Abfallbehälter abgeworfen (nicht gezeigt). Erfindungsgemäss wurden die fünf verbleibenden Pipettenspitzen 1, deren in Schritt e) ermittelte erste und zweite Bilddaten innerhalb der vordefinierten Zulässigkeitsgrenzen liegen, derart durch die Halteeinrichtung in den zweiten Träger 20' abgegeben, dass die Löcher 22 mit den Positionen A1 bis A5 der Spalte A des zweiten Trägers 20' nacheinander aufgefüllt wurden, ohne dass dabei zwischen zwei abgegebenen Pipettenspitzen 1 ein oder mehrere leere Löcher 22 verblieben.

Figur 2d zeigt eine schematische Draufsicht auf den in Figur 2b gezeigten ersten Träger 20, nachdem in einem weiteren Schritt b) des in Figur 1 dargestellten Verfahrens eine weitere komplette Spalte von Pipettenspitzen 1 durch eine Halteeinrichtung (nicht gezeigt) aus der ersten Matrixanordnung M1 aufgenommen wurde, wobei die komplette Spalte im in Figur 2d dargestellten Ausführungsbeispiel die Positionen B1 bis B7 des ersten Trägers 20 umfasst.

Figur 2e zeigt eine schematische Draufsicht auf den zweiten Träger 20' aus Figur 2c, nachdem in einem weiteren Schritt g) des in Figur 1 dargestellten Verfahrens die sieben Pipettenspitzen 1, welche - wie in Figur 2d dargestellt - durch eine Halteeinrichtung aus Spalte B des ersten Trägers 20 aufgenommen wurden, derart in den zweiten Träger 20' abgegeben wurden, dass die zwei leeren Löcher 22, 22' mit den Positionen A6 und A7 der Spalte A des zweiten Trägers 20' zuerst nacheinander mit jeweils einer Pipettenspitze 1 aufgefüllt wurden und anschliessend die verbleibenden fünf Pipettenspitzen 1 in die Löcher 22 mit den Positionen B1 bis B6 der Spalte B des zweiten Trägers 20' abgegeben wurden, ohne dass dabei zwischen zwei abgegebenen Pipettenspitzen 1 ein oder mehrere leere Löcher 22 verblieben. Die Schritte b) bis g) des in Figur 1 dargestellten Verfahrens können beliebig oft wiederholt werden, insbesondere solange, bis sämtliche Löcher 22 des zweiten Trägers 20' mit überprüften Pipettenspitzen 1 befüllt wurden, in welchem Fall etwaige in der Halteeinrichtung übriggebliebene Pipettenspitzen in einen weiteren Träger 20" mit einer Vielzahl von Löchern 22 in einer zweiten Matrixanordnung M2 von Reihen und Spalten abgegeben werden, welche Löcher 22 zum Halten der abgegebenen Pipettenspitzen 1 geeignet sind.

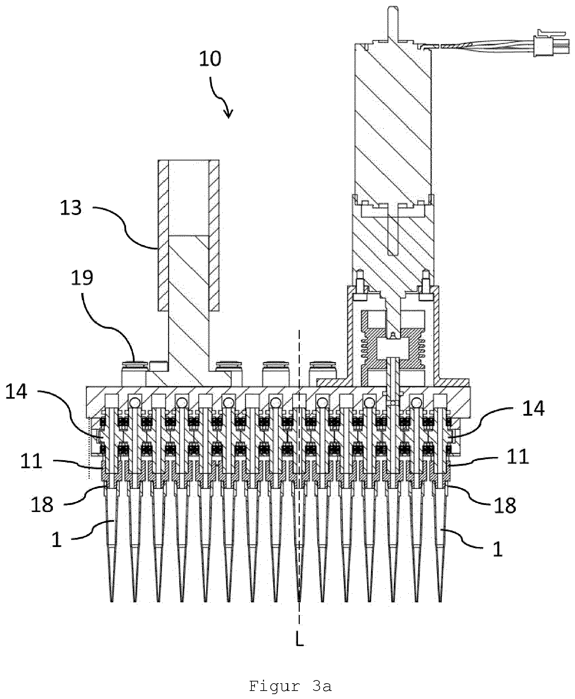

Figur 3a zeigt einen Längsschnitt durch eine Halteeinrichtung 10 zur Verwendung in einem Verfahren bzw. einer Vorrichtung wie hier beschrieben. Die Halteeinrichtung 10 weist fünfzehn Aufnahmeelemente 11 auf, an denen jeweils eine Pipettenspitze 1 aufgenommen sind. Die in dieser Ausführungsform der Halteeinrichtung 10 gezeigten Aufnahmeelemente 11 weisen jeweils einen konisch geformten Koppelansatz 18 auf, welcher fluidleitend mit einem Vakuumanschluss 19 verbunden ist. Die Pipettenspitzen 1 werden durch Beaufschlagung der jeweiligen Pipettenspitzenkavität mit Unterdruck an den Aufnahmeelementen 11 der Halteeinrichtung 10 gehalten. Die Halteeinrichtung 10 umfasst ferner Mittel 13 zum Drehen der in der Halteeinrichtung 10 an den Aufnahmelementen 11 gehalterten Pipettenspitzen 1 um ihre Längsachse L. Die Mittel 13 zum Drehen der gehalterten Pipettenspitzen 1 um ihre Längsachse L sind jeweils einem Aufnahmeelement 11 zugeordnet und umfassen im dargestellten Ausführungsbeispiel ein Zahnrad 14 an jedem Aufnahmeelement 11. Die Zahnräder 14 greifen in der dargestellten Ausführungsform ineinander und sind durch einen gemeinsamen Drehantrieb drehbar.

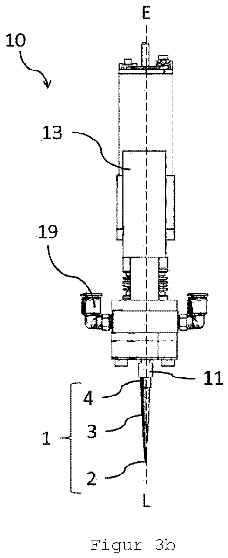

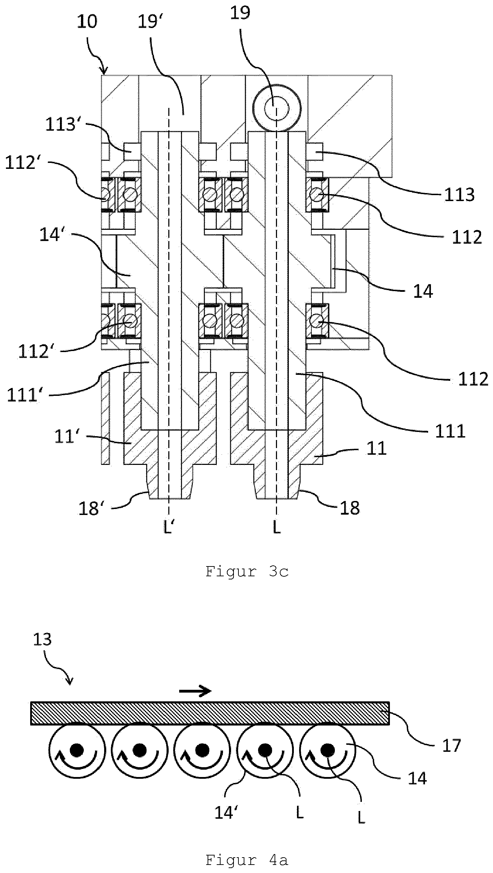

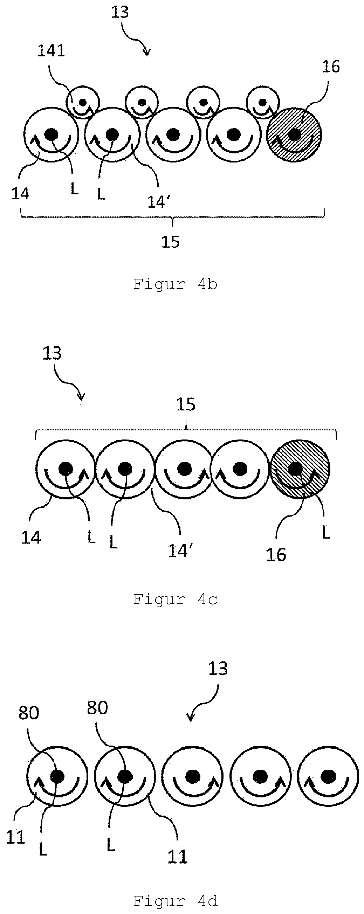

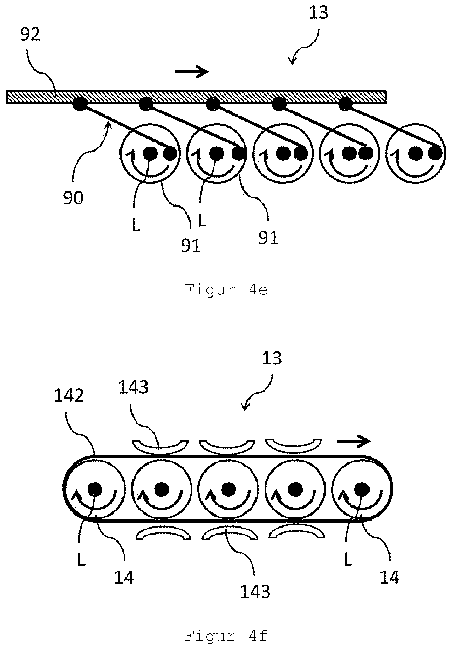

Durch die dargestellten Mittel 13 können die Pipettenspitzen 1 jeweils aus einer ersten Position in eine zweite Position um einen Drehwinkel von zumindest 90° gedreht werden. An der Halteeinrichtung 10 sind ferner Mittel 12 zum Ausrichten der in der Halteeinrichtung 10 gehalterten Pipettenspitzen 1 befestigt, welche Teil einer - in der gezeigten Darstellung nicht sichtbaren - Bewegungseinrichtung 60 zum motorischen Bewegen der Halteeinrichtung 10 in Richtung einer X-, Y- und Z-Raumachse ist. Eine solche Bewegungseinrichtung ist beispielsweise ein Industrieroboter, welcher an sich dem Fachmann bekannt ist. Figur 3b zeigt eine Stirnseitenansicht der Halteeinrichtung 10 aus Figur 3a. Aus dieser Ansicht ist insbesondere ersichtlich, dass sämtliche Aufnahmeelemente 11 in einer Reihe angeordnet sind. Jede Pipettenspitze 1 ist dabei an ihrem Aufsteckende 4 an einem Aufnahmeelement 11 gehalten, welches Aufsteckende 4 sich in Längsrichtung L an dem zur ihrer Pipettenspitzenauslassöffnung 2 gegenüberliegenden Ende befindet. Die Pipettenspitzenmantelfläche 3 stellt den Bereich zwischen dem Aufsteckende 4 und der Auslassöffnung 2 einer Pipettenspitze 1 dar. Die Längsachsen L der durch die Aufnahmeelemente 11 gehalterten Pipettenspitzen 1 liegen dabei im Wesentlichen in einer gemeinsamen Ebene E. Die in Reihe angeordneten Pipettenspitzen 1 werden mit mindestens einem Antrieb 13 um einen Drehwinkel gedreht. Die einzelnen Pipettenspitzen 1 sind dabei mit einer Mechanik miteinander verbunden, wie nachfolgend in Figur 4 anhand von mehreren denkbaren Beispielen noch näher beschrieben wird.

Figur 3c zeigt die in Figur 3a gezeigte Halteeinrichtung 10 in einer Detailansicht und ohne Pipettenspitzen. Aus der in Figur 3c gezeigten Ansicht ist insbesondere ersichtlich, dass die Längsachsen L, L' zweier benachbarter Aufnahmeelemente 11, 11' parallel verlaufen und dass die Aufnahmeelemente 11, 11' jeweils drehfest mit einer Kurbel 111, 111' verbunden sind. An den Kurbeln 111, 111' ist wiederum jeweils ein Zahnrad 14, 14' angeordnet, welche Zahnräder 14, 14' ineinandergreifen und somit miteinander in Wirkverbindung stehen. Die Kurbeln 111, 111' sind jeweils durch mehrere Lager 112, 112' gelagert und mittels einer Dichtung 113, 113' abgedichtet. Die Aufnahmeelemente 11, 11' weisen jeweils einen konisch geformten Koppelansatz 18, 18' auf, welcher fluidleitend mit einem Vakuumanschluss 19, 19' verbunden ist.

In Figur 4 sind weitere denkbare Ausführungsformen der Mittel 13 zum Drehen der an den Aufnahmeelementen einer Halteeinrichtung gehalterten Pipettenspitzen (nicht gezeigt) um ihre Längsachse L schematisch dargestellt, und zwar jeweils aus einer Ansicht in Richtung der Längsachse L der Pipettenspitzen 1. Dabei zeigt Figur 4a fünf Zahnräder 14, 14', welche nicht ineinandergreifen und durch einen gemeinsamen Zahnstangentrieb 17 bewegbar sind, d.h. um ihre jeweilige Längsachse L drehbar sind. Dabei ist an jedem Aufnahmeelement ein Zahnrad 14, 14' angeordnet (aus Gründen der Übersichtlichkeit nicht gezeigt). Durch Bewegen des Zahnstangentriebs 17 in Richtung des in Figur 4a oberhalb des Zahnstangentriebs 17 eingezeichneten Pfeils sind alle Zahnräder 14, 14' - und somit auch alle Pipettenspitzen - in dieselbe Richtung drehbar, wie durch die Pfeile in den Zahnrädern 14, 14' angegeben. Figur 4b zeigt eine Ausführungsform der Mittel 13 zum Drehen der Pipettenspitzen 1, bei der an jedem der fünf Aufnahmeelemente ein Zahnrad 14 angeordnet ist. Zwischen zwei benachbarten Zahnrädern 14, 14' ist jeweils ein Zwischenzahnrad 141 angeordnet, welches mit den beiden Zahnrädern 14, 14' in Wirkverbindung. Die dargestellten fünf Zahnräder 14 und die vier Zwischenzahnräder 141 bilden einen Zahnradverbund 15 aus. Wenigstens eines der Zahnräder 14, 14' und/oder wenigstens eines der Zwischenzahnräder 141 des Zahnradverbunds 15 ist durch einen Drehantrieb 16, beispielsweise durch einen Elektroantrieb, Pneumatikzylinder oder einen Hubmagnet, drehbar. In dieser Ausführungsform sind alle Zahnräder 14, 14' - und somit auch alle Pipettenspitzen - in dieselbe Richtung drehbar, wie durch die Pfeile in den Zahnrädern 14, 14' angegeben. In Figur 4c ist eine Ausführungsform gezeigt, in der an jedem Aufnahmeelement (nicht gezeigt) ein Zahnrad 14 angeordnet ist. Jeweils zwei benachbarte Zahnräder 14, 14' greifen zur Ausbildung eines Zahnradverbunds 15 ineinander. Der Zahnradverbund 15 wird von einem in der Darstellung am rechten äusseren Ende des Zahnradverbunds 15 angeordneten Drehantrieb 16 angetrieben. Aus dieser Ausführungsform ergibt sich für die Pipettenspitzen eine alternierende Drehrichtung, wie durch die Pfeile in Figur 4c dargestellt, was für die Auswertung jedoch nicht von Bedeutung ist. In der in Figur 4d dargestellten Variante ist jedem fünf Aufnahmeelemente 11 ein Einzelantrieb 80, beispielsweise ein Elektroantrieb, Pneumatikzylinder oder einen Hubmagnet, zugeordnet. Die Aufnahmeelemente 11 stehen dabei untereinander nicht in Wirkverbindung. Wie aus der Richtung der dargestellten Pfeile hervorgeht, ist dadurch jedes Aufnahmeelement 11 unabhängig von den restlichen Aufnahmeelementen 11 der Halteeinrichtung (nicht dargestellt) drehbar. In der in Figur 4e dargestellten Ausführungsform umfasst jedes Aufnahmeelement (nicht gezeigt) eine Scheibe 91, welche in Umfangsrichtung U der Aufnahmeelemente drehfest an den Aufnahmeelementen angeordnet ist. An den Scheiben 91 ist jeweils exzentrisch ein Stangenantrieb 90 zur Umformung einer Hin- und Herbewegung einer Antriebsstange 92 in eine Drehbewegung der Scheiben 91 und damit der Aufnahmeelemente und der Pipettenspitzen angesetzt. In der in Figur 4f dargestellten Variante der Mittel 13 ist an jedem Aufnahmeelement ein Zahnrad 14 angeordnet. Die Zahnräder 14 greifen nicht ineinander und sind durch einen gemeinsamen Zahnriemen 142 drehbar. An den Stellen, an denen der Zahnriemen 142 nicht durch die in der Darstellung zuäusserst angeordneten Zahnräder 14 umgelenkt wird, sind ferner Abstützmittel 143 zum Sicherstellen der Wirkverbindung zwischen den Zahnrädern 14 und dem Zahnriemen 142 vorhanden. Die sechs dargestellten Abstützmittel 143 verhindern, dass sich der Zahnriemen 142 von den Zahnrädern 14 löst und der Antrieb der Aufnahmeelemente unterbrochen wird.

Figur 5 zeigt eine Anordnung umfassend eine Halteeinrichtung 10 und eine erste Bilderfassungseinrichtung 30 in einer perspektivischen Ansicht. Die Pipettenspitzenauslassöffnungen 2 der in der Halteeinrichtung 10 gehalterten Pipettenspitzen 1 werden mit Hilfe von Bewegungseinrichtung 60 derart an der ersten Bilderfassungseinrichtung 30 vorbeibewegt, dass die optische Achse OA1 der ersten Bilderfassungseinrichtung 30 während der Erfassung der ersten Bilddaten parallel zur jeweiligen Längsachse L der an den Aufnahmeelementen 11 gehalterten Pipettenspitzen 1 und auf die jeweilige Pipettenspitzenauslassöffnung 2 ausgerichtet ist. Die Bewegung der Halteeinrichtung 10 durch die Bewegungseinrichtung 60 erfolgt dabei in Richtung der durch die gehalterten Pipettenspitzen 1 aufgespannten Ebene E und im Wesentlichen senkrecht zur und durch die optische Achse OA1 der ersten Bilderfassungseinrichtung 30, wobei die jeweils durch die optische Achse OA1 der ersten Bilderfassungseinrichtung 30 hindurchgeführten Pipettenspitzen 1 jeweils im Wesentlichen in einer Bildebene, also jeweils im selben Abstand zur ersten Bilderfassungseinrichtung 30, an dieser vorbeibewegt werden. Ferner ist eine Messeinrichtung 31 in Form einer Lichtschranke vorgesehen, welche den Eintritt der jeweiligen Pipettenspitzenauslassöffnungen 2 in die optische Achse OA1 der ersten Bilderfassungseinrichtung 30 feststellt. Die Messeinrichtung 31 ist signalleitend mit der ersten Bilderfassungseinrichtung 30 verbunden (nicht gezeigt) und löst die Erfassung der ersten Bilddaten durch die erste Bilderfassungseinrichtung 30 aus, sobald die Lichtschranke durch eine Pipettenspitze 1 unterbrochen wird.

Figur 6 zeigt eine perspektivische Ansicht einer Anordnung umfassend eine Halteeinrichtung 10 und eine zweite Bilderfassungseinrichtung 40, wie sie während dem Erfassen der zweiten Bilddaten in Schritt d) des erfindungsgemässen Verfahrens vorliegt. Die optische Achse OA2 der zweiten Bilderfassungseinrichtung 40 ist dabei im Wesentlichen senkrecht auf die durch die gehalterten Pipettenspitzen 1 definierte Ebene E ausgerichtet, wobei diese Ebene E im Wesentlichen in einer Bildebene der zweiten Bilderfassungseinrichtung 40 liegt. Die zweiten Bilddaten der jeweiligen Teilsegmente der Pipettenspitzenmantelflächen 3, welche der zweiten Bilderfassungseinrichtung 40 zugewandt sind, sind somit gleichzeitig erfassbar. Durch Drehen der in der Halteeinrichtung 10 gehalterten Pipettenspitzen 1 aus einer Ausgangsposition um einen Drehwinkel von 90° in eine Endposition ist jeweils ein weiteres Teilsegment der Pipettenspitzenmantelfläche 3 erfassbar, wobei aus den in der Ausgangsposition und der Endposition erhaltenen Bilddaten der Rundlauf der Pipettenspitzen überprüfbar ist (nicht gezeigt).

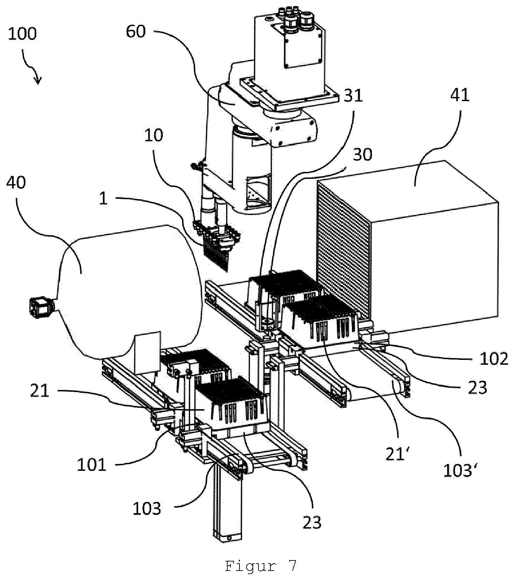

Figur 7 zeigt eine Variante einer Vorrichtung 100 zum Überprüfen von Pipettenspitzen 1, in einer perspektivischen Ansicht. Die Vorrichtung 100 umfasst eine Aufnahmeposition 101, welche zur Bereitstellung eines ersten Racks 21 enthaltend Pipettenspitzen in einer ersten Matrixanordnung M1 ausgebildet ist, wobei die Racks 21 im gezeigten Ausführungsbeispiel jeweils auf einem Werkstückträger 23 angeordneten sind. Die Werkstückträger 23 sind durch eine Transporteinrichtung, beispielsweise ein Transportband 103, auf die Aufnahmeposition 101 bewegbar. Die Vorrichtung 100 besitzt ferner eine Haltevorrichtung 10 zum Aufnehmen einer kompletten Reihe oder kompletten Spalte von Pipettenspitzen 1 aus dem an der Aufnahmeposition 101 bereitgestellten ersten Rack 20. Die Halteeinrichtung 10 umfasst eine Mehrzahl von in einer Reihe angeordneten Aufnahmeelementen 11, welche zur Aufnahme jeweils einer Pipettenspitze 1 ausgebildet sind. Bei einer ersten Matrixanordnung M1 des ersten Racks von beispielsweise acht Reihen und zwölf Spalten besitzt die Halteeinrichtung also zumindest acht in einer Reihe angeordnete Aufnahmeelemente 11, um eine komplette Spalte von acht Pipettenspitzen aus einer der zwölf Spalten des ersten Racks aufnehmen zu können. Es ist erfindungsgemäss jedoch denkbar, dass die Halteeinrichtung zwölf in einer Reihe angeordnete Aufnahmeelemente 11 aufweist, sodass entweder eine komplette Spalte von acht Pipettenspitzen aus einer der zwölf Spalten des ersten Racks aufgenommen werden können oder aber eine komplette Reihe von zwölf Pipettenspitzen aus einer der acht Reihen des ersten Racks aufgenommen werden können. Die Vorrichtung 100 umfasst ferner eine erste Bilderfassungseinrichtung 30 zum Erfassen von ersten Bilddaten der jeweiligen Pipettenspitzenauslassöffnungen 2 sowie eine zweite Bilderfassungseinrichtung 40 zum Erfassen von zweiten Bilddaten der in der Halteeinrichtung 10 gehalterten Pipettenspitzen 1. Darüber hinaus ist eine Messeinrichtung 31 zum Erfassen des Durchtritts der Pipettenspitzen durch die optische Achse der ersten Bilderfassungseinrichtung vorhanden. Vorrichtung 100 umfasst ferner eine fest relativ zur zweiten Bilderfassungseinrichtung 40 angeordnete Beleuchtungseinrichtung 41, welche zur Aussendung von Licht auf die zweite Bilderfassungseinrichtung 40 in die zur optischen Achse der zweiten Bilderfassungseinrichtung 40 entgegengesetzte Richtung ausgebildet ist. Eine Datenverarbeitungsanlage (nicht gezeigt), in der Zulässigkeitsgrenzen für die ersten und/oder zweiten Bilddaten vordefiniert sind, ist dabei signalleitend mit zumindest der ersten Bilderfassungseinrichtung 30, der zweiten Bilderfassungseinrichtung 40 und der Halteeinrichtung 10 verbunden, sodass Pipettenspitzen 1, deren erste oder zweite Bilddaten ausserhalb der in der Datenverarbeitungsanlage vordefinierten Zulässigkeitsgrenzen liegen, von ihrem jeweiligen Aufnahmeelement 11 in einen Abfallbehälter (nicht gezeigt) abgeworfen werden können. Die Vorrichtung 100 umfasst weiter eine Abgabeposition 102, auf der im gezeigten Ausführungsbeispiel ein zweites Rack 21' auf einem weiteren Werkstückträger 23 bereitgestellt ist. Das zweite Rack 21' weist eine Vielzahl von Löchern in einer zweiten Matrixanordnung M2 von Reihen und Spalten auf, wobei jedes Loch zum Halten einer Pipettenspitze 1 ausgebildet ist. Im gezeigten Ausführungsbeispiel sind das erste Rack 21 und das zweite Rack 21' identisch ausgebildet. Die Vorrichtung 100 umfasst weiter Mittel zum Ausrichten der in der Halteeinrichtung 10 gehalterten Pipettenspitzen 1 relativ zur ersten Bilderfassungseinrichtung 30 und zur zweiten Bilderfassungseinrichtung 40, welche im gezeigten Ausführungsbeispiel durch Bewegungseinrichtung 60, einen Industrieroboter, verwirklicht sind. Die Bewegungseinrichtung 60 ist zum Bewegen der Halteeinrichtung 10 zwischen der Aufnahmeposition 101, der ersten Bilderfassungseinrichtung 30, der zweiten Bilderfassungseinrichtung 40, dem in Figur 7 nicht gezeigten Abfallbehälter und der Abgabeposition 102 ausgebildet.

## Patentansprüche

1. Verfahren zum Überprüfen von sich jeweils entlang einer Längsachse (L) erstreckenden Pipettenspitzen (1), das Verfahren umfassend die folgenden Verfahrensschritte:
a) Bereitstellen von Pipettenspitzen (1), welche in einem ersten Träger (20), insbesondere in einem ersten Rack (21), in einer ersten Matrixanordnung (M1) von Reihen und Spalten angeordnet sind;
b) Aufnahme einer Reihe oder Spalte, bevorzugt einer kompletten Reihe oder kompletten Spalte, von Pipettenspitzen (1) aus der ersten Matrixanordnung (M1), insbesondere aus dem ersten Rack (20), durch eine Halteeinrichtung (10) umfassend eine Mehrzahl von in einer Reihe angeordneten Aufnahmeelementen (11) zur Aufnahme jeweils einer Pipettenspitze (1), wobei die Längsachsen (L) der durch die Aufnahmeelemente (11) gehalterten Pipettenspitzen (1) im Wesentlichen in einer gemeinsamen Ebene (E) liegen;
c) Erfassen von ersten Bilddaten der jeweiligen Pipettenspitzenauslassöffnungen (2) der durch die Halteeinrichtung (10) aufgenommenen Pipettenspitzen (1) durch eine erste Bilderfassungseinrichtung (30), deren optische Achse (OA1) während der Erfassung der ersten Bilddaten parallel zur jeweiligen Längsachse (L) der in der Halteeinrichtung (10) gehalterten Pipettenspitzen (1) und auf die jeweilige Pipettenspitzenauslassöffnung (2) ausgerichtet ist;
d) Erfassen von zweiten Bilddaten der in der Halteeinrichtung (10) gehalterten Pipettenspitzen (1) durch eine zweite Bilderfassungseinrichtung (40), deren optische Achse (OA2) während der Erfassung der zweiten Bilddaten im Wesentlichen senkrecht auf die durch die gehalterten Pipettenspitzen (1) definierte Ebene (E) und auf die der zweiten Bilderfassungseinrichtung (40) zugewandten Teilsegmente der jeweiligen Pipettenspitzenmantelflächen (3) der gehalterten Pipettenspitzen (1) ausgerichtet ist, sodass alle in der Halteeinrichtung (10) gehalterten Pipettenspitzen (1) im Wesentlichen in einer Bildebene der zweiten Bilderfassungseinrichtung (40) angeordnet sind;
e) Ermitteln, ob die ersten und/oder zweiten Bilddaten innerhalb von vordefinierten Zulässigkeitsgrenzen liegen oder nicht, mit Hilfe einer Datenverarbeitungsanlage (70) ;
f) Abwerfen derjenigen Pipettenspitzen (1), deren in Schritt e) ermittelte erste und/oder zweite Bilddaten ausserhalb der vordefinierten Zulässigkeitsgrenzen liegen, in einen Abfallbehälter (50) durch die Halteeinrichtung (10);
g) Abgabe derjenigen Pipettenspitzen (1), deren in Schritt e) ermittelte erste und zweite Bilddaten innerhalb der vordefinierten Zulässigkeitsgrenzen liegen, in einen zweiten Träger (20'), insbesondere in ein Rack (21, 21'), mit einer Vielzahl von Löchern (22) in einer zweiten Matrixanordnung (M2) von Reihen und Spalten, welche Löcher (22) zum Halten der abgegebenen Pipettenspitzen (1) geeignet sind;
wobei in Verfahrensschritt d) die zweiten Bilddaten aller in der Halteeinrichtung (10) gehalterten Pipettenspitzen (1) gleichzeitig erfasst werden, und wobei die Pipettenspitzen (1) in Verfahrensschritt g) derart durch die Halteeinrichtung (10) abgegeben werden, dass die jeweiligen Reihen oder Spalten von Löchern (22) des zweiten Trägers (20') nacheinander aufgefüllt werden, ohne dass dabei zwischen zwei abgegebenen Pipettenspitzen (1) ein oder mehrere leere Löcher (22, 22') verbleiben.

2. Verfahren nach Anspruch 1, wobei die ersten Bilddaten in Schritt c) erfasst werden beim Bewegen der in der Halteeinrichtung (10) gehalterten Pipettenspitzen (1) quer zur optischen Achse (OA1) der ersten Bilderfassungseinrichtung (30) und durch die optische Achse (OA1) der ersten Bilderfassungseinrichtung (30) relativ zueinander, wobei das Eintreten der jeweiligen Pipettenspitzen (1), insbesondere der jeweiligen Pipettenspitzenauslassöffnungen (2), in die optische Achse (OA1) der ersten Bilderfassungseinrichtung (30) durch eine Messeinrichtung (31), insbesondere eine Lichtschranke (31), festgestellt wird und das Erfassen der ersten Bilddaten durch die erste Bilderfassungseinrichtung (30) auslöst, wobei bevorzugt lediglich die Halteeinrichtung (10) bewegt wird und die erste Bilderfassungseinrichtung (30) ortsfest verbleibt, wobei bevorzugt die jeweiligen Pipettenspitzenauslassöffnungen (2) der in der Halteeinrichtung (10) gehalterten Pipettenspitzen (1) im Wesentlichen in einer einzigen Bildebene der ersten Bilderfassungseinrichtung (30) an der ersten Bilderfassungseinrichtung vorbeigeführt werden.

3. Verfahren nach Anspruch 1 oder 2, wobei Schritt d) die folgenden Verfahrensschritte umfasst:
i. Aufnehmen eines ersten Bildes der in der Halteeinrichtung (10) gehalterten Pipettenspitzen (1), wobei sich die Pipettenspitzen (1) jeweils in einer ersten Position (P1) befinden;
ii. Drehen der in der Halteeinrichtung (10) gehalterten Pipettenspitzen (1) um ihre Längsachse (L) um einen vorbestimmten Drehwinkel (α) in eine zweite Position (P2) ;
iii. Aufnehmen eines zweiten Bildes der in der Halteeinrichtung (10) gehalterten Pipettenspitzen (1), wobei sich die Pipettenspitzen (1) jeweils in der zweiten Position (P2) befinden;
wobei der Drehwinkel (α) zwischen der ersten Position (P1) und der zweiten Position (P2) wenigstens im Wesentlichen 90°, bevorzugt zwischen im Wesentlichen 90° und im Wesentlichen 180°, besonders bevorzugt im Wesentlichen 180°, beträgt.

4. Verfahren nach Anspruch 3, wobei die Pipettenspitzen (1) zum Aufnehmen weiterer Bilder, bevorzugt weiterer ein bis vier Bilder, in eine der Anzahl der weiteren Bilder entsprechende Anzahl von Zwischenpositionen (P3, P4, P5, P6) gedreht werden, welche Zwischenpositionen (P3, P4, P5, P6) zwischen der ersten Position (P1) und der zweiten Position (P2) liegen und bevorzugt gleichmässig zwischen der ersten Position (P1) und der zweiten Position (P2) verteilt sind.

5. Verfahren nach einem der vorhergehenden Ansprüche, wobei die Pipettenspitzen (1) jeweils kraftschlüssig an den Aufnahmeelementen (11) der Halteeinrichtung (10) gehaltert werden, bevorzugt durch Beaufschlagung der Pipettenspitzen (1) mit Unterdruck.

6. Verfahren nach einem der vorhergehenden Ansprüche, wobei die Datenverarbeitungsanlage (70) eine Benutzerschnittstelle (71) umfasst und das Verfahren zusätzlich Verfahrensschritt:
h) Auswählen von wenigstens einem Aufnahmeelement (11) der Halteeinrichtung (10) durch einen Benutzer, wobei die an den ausgewählten Aufnahmeelementen (11) gehalterten Pipettenspitzen (1) in Folge der Auswahl unabhängig von den erfassten ersten und zweiten Bilddaten in Schritt f) als Ausschuss verworfen werden; umfasst, wobei Schritt h) vor irgendeinem der Schritte a) bis f) durchgeführt wird.

7. Vorrichtung (100) zum Überprüfen von sich jeweils entlang einer Längsachse (L) erstreckenden Pipettenspitzen (1), insbesondere ausgebildet zur Durchführung eines Verfahrens nach einem der vorhergehenden Ansprüche, die Vorrichtung (100) umfassend:
- Eine zur Bereitstellung eines ersten Trägers (20), insbesondere eines ersten Racks (20), enthaltend Pipettenspitzen (1) in einer ersten Matrixanordnung (M1) von Reihen und Spalten ausgebildete Aufnahmeposition (101);
- Eine Halteeinrichtung (10) zum Aufnehmen einer Reihe oder Spalte von Pipettenspitzen (1) aus der an der Aufnahmeposition (101) bereitgestellten ersten Matrixanordnung (M1) von Reihen und Spalten, insbesondere aus dem ersten Rack (20), die Halteeinrichtung (10) umfassend eine Mehrzahl von in einer Reihe angeordneten Aufnahmeelementen (11), welche Aufnahmeelemente (11) zur Aufnahme jeweils einer Pipettenspitze (1) ausgebildet sind, wobei die Längsachsen (L) der durch die Aufnahmeelemente (11) gehalterten Pipettenspitzen (1) im Wesentlichen in einer gemeinsamen Ebene (E) liegen;
- Eine erste Bilderfassungseinrichtung (30) zum Erfassen von ersten Bilddaten der jeweiligen Pipettenspitzenauslassöffnungen (2) der durch die Halteeinrichtung (10) aufgenommenen Pipettenspitzen (1);
- Eine zweite Bilderfassungseinrichtung (40) zum Erfassen von zweiten Bilddaten der in der Halteeinrichtung (10) gehalterten Pipettenspitzen (1);
- Eine Datenverarbeitungsanlage (70), welche signalleitend mit der ersten Bilderfassungseinrichtung (30), der zweiten Bilderfassungseinrichtung (40) und der Halteeinrichtung (10) verbunden ist, und in der Zulässigkeitsgrenzen für die ersten und/oder zweiten Bilddaten vordefiniert sind;
- Einen zur Aufnahme von durch die Halteeinrichtung (10) abgeworfenen Pipettenspitzen (1) ausgebildeten Abfallbehälter (50);
- Eine Abgabeposition (102), auf der ein zweiter Träger (20'), insbesondere ein Rack (20, 20'), mit einer Vielzahl von Löchern (22) in einer zweiten Matrixanordnung (M2) von Reihen und Spalten, welche Löcher (22) zum Halten der Pipettenspitzen (1) geeignet sind, bereitstellbar ist;
wobei die Vorrichtung (100) Mittel (12) zum Ausrichten der optischen Achse (OA1) der ersten Bilderfassungseinrichtung (30) parallel zur jeweiligen Längsachse (L) der in der Halteeinrichtung (10) gehalterten Pipettenspitzen (1) und auf die jeweiligen Pipettenspitzenauslassöffnungen (2) und zum Ausrichten der optischen Achse (OA2) der zweiten Bilderfassungseinrichtung (40) im Wesentlichen senkrecht auf die durch die gehalterten Pipettenspitzen (1) definierte Ebene (E) und auf die der zweiten Bilderfassungseinrichtung (40) zugewandten Teilsegmente der jeweiligen Pipettenspitzenmantelflächen (3) der gehalterten Pipettenspitzen (1) aufweist, wobei die Halteeinrichtung (10) zwischen der Aufnahmeposition (101), der ersten Bilderfassungseinrichtung (30), der zweiten Bilderfassungseinrichtung (40), dem Abfallbehälter (50) und/oder der Abgabeposition (102) hin und her bewegbar ist, und wobei die Halteeinrichtung (10) zum nacheinander Auffüllen der jeweiligen Reihen oder Spalten von Löchern (22) des zweiten Trägers (20') mit Pipettenspitzen (1) ausgebildet ist, ohne dass dabei zwischen zwei abgegebenen Pipettenspitzen (1, 1) ein oder mehrere leere Löcher (22, 22') verbleiben.

8. Vorrichtung (100) nach Anspruch 7, wobei die Vorrichtung (100) ferner eine Messeinrichtung (31), insbesondere eine Lichtschranke (31), zum Feststellen des Eintritts der jeweiligen Pipettenspitzen (1), insbesondere der jeweiligen Pipettenspitzenauslassöffnungen (2), in die optische Achse (OA1) der ersten Bilderfassungseinrichtung (30) umfasst, welche Messeinrichtung (31) signalleitend mit der ersten Bilderfassungseinrichtung (30) verbunden ist und zum Auslösen der Erfassung der ersten Bilddaten durch die erste Bilderfassungseinrichtung (30) ausgebildet ist.

9. Vorrichtung (100) nach Anspruch 7 oder 8, wobei die Halteeinrichtung (10) Mittel (13) zum Drehen der in der Halteeinrichtung (10) gehalterten Pipettenspitzen (1) um ihre Längsachse (L) aufweist, welche Mittel (13) zum Drehen der Pipettenspitzen (1) aus einer ersten Position (P1) in eine zweite Position (P2) um einen Drehwinkel (α) von wenigstens im Wesentlichen 90°, bevorzugt zwischen im Wesentlichen 90° und im Wesentlichen 180°, besonders bevorzugt von im Wesentlichen 180°, ausgebildet sind.

10. Vorrichtung (100) nach Anspruch 9, wobei die Mittel (13) zum Drehen der in der Halteeinrichtung (10) gehalterten Pipettenspitzen (1) umfassen:
- Ein Zahnrad (14) an jedem Aufnahmeelement (11), welche Zahnräder (14) zur Ausbildung eines Zahnradverbunds (15) ineinandergreifen und durch einen, bevorzugt an einem Ende des Zahnradverbunds (15) angeordneten, Drehantrieb (16) drehbar sind; oder
- Ein Zahnrad (14) an jedem Aufnahmeelement (11), wobei jeweils zwei benachbarte Zahnräder (14, 14') über ein Zwischenzahnrad (141) unter Ausbildung eines Zahnradverbunds (15) miteinander in Wirkverbindung stehen, wobei wenigstens eines der Zahnräder (14) und/oder wenigstens eines der Zwischenzahnräder (141) des Zahnradverbunds (15) durch einen Drehantrieb (16) drehbar ist; oder
- Ein Zahnrad (14) an jedem Aufnahmeelement (11), welche Zahnräder (14) nicht ineinandergreifen und durch einen gemeinsamen Zahnstangentrieb (17) drehbar sind; oder
- Ein Zahnrad (14) an jedem Aufnahmeelement (11), welche Zahnräder (14) nicht ineinandergreifen und durch einen gemeinsamen Zahnriemen (142) drehbar sind, wobei bevorzugt Abstützmittel (143) zum Sicherstellen der Wirkverbindung zwischen den Zahnrädern (14) und dem Zahnriemen (142) vorhanden sind; oder
- Einen Einzelantrieb (80), insbesondere einen Elektromotor (80), an jedem Aufnahmeelement (11), wobei jedes Aufnahmeelement (11) durch den Einzelantrieb (80) unabhängig von den restlichen Aufnahmeelementen (11) der Halteeinrichtung (10) drehbar ist; oder
- Eine Scheibe (91) an jedem Aufnahmeelement (11), welche Scheiben (91) jeweils in Umfangsrichtung (U) der Aufnahmeelemente (11) drehfest an den Aufnahmeelementen (11) angeordnet sind und an welchen Scheiben (91) jeweils exzentrisch ein Stangenantrieb (90) zur Umformung einer Hin- und Herbewegung einer Antriebsstange (92) in eine Drehbewegung der Aufnahmeelemente (11) ansetzt.

11. Vorrichtung (100) nach einem der Ansprüche 7 bis 10, wobei die Mittel (13) zum Drehen der in der Halteeinrichtung (10) gehalterten Pipettenspitzen (1) zum Drehen der Pipettenspitzen (1) in Zwischenpositionen (P3, P4, P5, P6) ausgebildet sind, welche Zwischenpositionen (P3, P4, P5, P6) zwischen der ersten Position (P1) und der zweiten Position (P2) liegen und bevorzugt gleichmässig zwischen der ersten Position (P1) und der zweiten Position (P2) verteilt sind.

12. Vorrichtung (100) nach einem der Ansprüche 7 bis 11, wobei die Anzahl der Aufnahmeelemente (11) der Halteeinrichtung (10) mit der Anzahl der in einer Reihe oder Spalte der ersten Matrixanordnung (M1) bereitgestellten Pipettenspitzen (1) übereinstimmt, wobei die Halteeinrichtung (10) bevorzugt wenigstens 5, bevorzugt wenigstens 10 und noch besser wenigstens 15 Aufnahmeelemente (11) umfasst.

13. Vorrichtung (100) nach einem der Ansprüche 7 bis 12, wobei die Aufnahmeelemente (11) jeweils einen, insbesondere konisch geformten, Koppelansatz (18) umfassen, welcher fluidleitend mit einem Vakuumanschluss (19) verbunden oder verbindbar ist, um die Pipettenspitzen (1) durch Beaufschlagung mit Unterdruck an den Aufnahmeelementen (11) der Halteeinrichtung (10) zu haltern.

14. Vorrichtung (100) nach einem der Ansprüche 7 bis 13, wobei die Aufnahmeelemente (11) der Halteeinrichtung (10) in Bezug zueinander beweglich ausgebildet sind, so dass ihre Position zueinander an die erste Matrixanordnung (M1) und/oder die zweite Matrixanordnung (M2) von Pipettenspitzen angepasst werden kann.

15. Spritzgiessanlage (200) umfassend wenigstens eine Vorrichtung (100) zum Überprüfen von Pipettenspitzen (1) nach einem der Ansprüche 7 bis 14.
